# EUROPEAN PATENT APPLICATION

(11) **EP 4 753 357 A1**
(43) Date of publication of application: **03.06.2026**
(21) Application number: 24863094.9
(22) Date of filing: 26.08.2024
(51) Int. Cl.: H04W 74/04, H04W 74/00, H04W 72/0446, H04J 3/16, H04W 84/12, H04W 72/50, H04W 74/0816, H04L 5/22, H04B 7/26

(54) **METHOD AND DEVICE FOR PERFORMING C-TDMA OPERATION BY IDENTIFYING TXOP THROUGH INFORMATION ABOUT NOMINAL TXOP DURATION IN WIRELESS LAN SYSTEM**

(30) Priority: 05.09.2023 KR 20230117965; 08.09.2023 KR 20230119883; 19.09.2023 KR 20230124856; 14.11.2023 KR 20230157422; 27.12.2023 KR 20230193089; 29.12.2023 KR 20230197595; 08.02.2024 KR 20240019946
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Frenkel, Matthias Alexander
(86) International application number: PCT/KR2024/012686
(87) International publication number: WO 2025/053513

(57) **Abstract**

Proposed are a method and device for performing a C-TDMA operation by identifying a TXOP through information about a nominal TXOP duration in a wireless LAN system. Specifically, a first AP receives notification information about a first TXOP from a second AP. The first AP receives an MU-RTS trigger frame from the second AP. The first AP transmits a CTS frame to the second AP. The first AP exchanges a first frame with a first non-AP after the CTS frame is transmitted and SIFS or PIFS.

## Description

### TECHNICAL FIELD

This specification relates to a technique for performing a C-TDMA operation by distinguishing a TXOP based on information on a Nominal TXOP duration in a wireless LAN system, and more particularly, to a method and apparatus in which a Basic TXOP and a Nominal TXOP are distinguished based on information on a Nominal TXOP duration, and a non-AP STA within a BSS of a DAP performs a frame exchange with the DAP without being affected by a NAV of an SAP.

### BACKGROUND ART

Next-generation Wi-Fi (e.g., IEEE 802.11be and/or later) aims to support ultra-high reliability when transmitting signals to STAs. To achieve this, various technologies are being considered to support high throughput, low latency, and extended range. For example, multiple APs can cooperate to perform TXOP sharing procedures.

### DISCLOSURE

### TECHNICAL PROBLEM

This specification proposes a method and apparatus for performing a C-TDMA operation by distinguishing a TXOP based on information on a Nominal TXOP duration in a wireless LAN system.

### TECHNICAL SOLUTION

An example of this specification proposes a method for performing a C-TDMA operation by distinguishing a TXOP based on information on a Nominal TXOP duration.

This embodiment may be performed in a network environment that supports a next-generation wireless LAN system (Ultra High Reliability (UHR) wireless LAN system or next Wi-Fi). The next-generation wireless LAN system is an improved version of the 802.1 The system and can satisfy backward compatibility with the 802.1 The system.

The present embodiment is performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

This embodiment proposes a method for performing TXOP sharing by setting a Nominal TXOP duration when performing a C-TDMA operation in communication between multiple Access Points (APs) (or a Multi-AP operation). In particular, the present embodiment proposes a method in which a Basic TXOP and a Nominal TXOP are distinguished based on information on a Nominal TXOP duration, and a non-AP STA within a BSS of a DAP performs a frame exchange with the DAP without being affected by a NAV of an SAP. In addition, the present embodiment proposes a method for utilizing a remaining TXOP by switching a TXOP holder from the DAP back to the SAP based on a TXOP return sequence.

A first access point (AP) receives notification information on a first Transmit Opportunity (TXOP) from the second AP.

The first AP receives a Multi User-Request to Send (MU-RTS) TXOP sharing (TXS) trigger frame from the second AP.

The first AP transmits a Clear to Send (CTS) frame to the second AP.

The first AP exchanges a first frame with a first non-AP station (STA) after a Short Inter Frame Space (SIFS) or a PCF (Point Coordination Function) IFS (PIFS) based on transmission of the CTS frame.

At this time, the second AP is a Sharing AP that controls coordination between a plurality of APs, and the first AP is a Shared AP that is allocated or shared with resources from the Sharing AP. The first non-AP STA is a non-AP STA within a Basic Service Set (BSS) of the first AP.

The first TXOP is an entire duration including all TXOPs in which the first and second APs participating in the coordination between the plurality of APs individually perform frame exchange. The first TXOP may be defined as a nominal TXOP scheduled by the Sharing AP for the C-TDMA operation.

The scheme for the coordination between the plurality of APs may include coordinated Multi-AP schemes such as Coordinated-Time Division Multiplexing Access (C-TDMA), Coordinated-Spatial Reuse (C-SR), Coordinated-Beamforming (C-BF) or Coordinated-Orthogonal Frequency Division Multiple Access (C-OFDMA).

In an example of the C-TDMA operation, an entity sharing a TXOP (SAP, here the second AP) and an entity with which the TXOP is shared (DAP, here the first AP) are APs having different BSSs. That is, since non-AP STAs within the BSS of the DAP may set a basic NAV based on frame transmission within the BSS of the SAP and may not be able to smoothly perform frame exchange with the DAP, a protection rule related to Network Allocation Vector (NAV) setting should be sophisticatedly applied for smooth coordination between APs and frame exchange within each BSS. In particular, non-AP STAs connected to the DAP may receive or sense a frame transmitted from the SAP or non-AP STAs connected to the SAP and a CTS frame transmitted from the DAP, and may set a basic NAV for the SAP. At this time, a problem may occur in which non-AP STAs connected to the DAP may not transmit an Uplink Physical Layer Convergence Procedure Protocol Data Unit (UL PPDU) or a frame to the DAP due to the basic NAV.

The present embodiment proposes a TXOP sharing method for performing a C-TDMA procedure by distinguishing a Basic TXOP and a Nominal TXOP based on information on a Nominal TXOP duration. In particular, the present embodiment proposes a C-TDMA operation in which a TXOP holder is switched from the SAP to the DAP or from the DAP back to the SAP, and during the C-TDMA operation, the DAP and some non-AP STAs within the BSS of the DAP may perform frame exchange with the DAP without being affected by the NAV of the SAP. For example, based on receiving a trigger frame to which a resource (Resource Unit (RU)) for enabling transmission of a PPDU or a frame from the DAP is allocated, associated non-AP STAs of the DAP may transmit the PPDU or the frame without the influence of the NAV.

### ADVANTAGEOUS EFFECTS

The present embodiment has an effect that non-AP STAs connected to a DAP may smoothly perform frame exchange with the DAP without setting a basic NAV by a SAP by terminating some TXOPs and switching a TXOP holder based on a protected C-TDMA based TXOP sharing scheme. Accordingly, appropriate scheduling according to coordination between a plurality of APs may be performed and an effect of increasing overall network throughput may be expected.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 illustrates an example of a modified transmission device and/or receiving device of the present specification.
FIG. 14 illustrates operation according to a conventional STX operation.
FIG. 15 illustrates an example of Coordinated OFDMA (C-OFDMA).
FIG. 16 illustrates an example of Coordinated Beamforming (CBF).
FIG. 17 illustrates an example of AP selection.
FIG. 18 illustrates an example of JTX/JT.
FIG. 19 illustrates an example of an operation of an MU-RTS TXS trigger frame based on a value of a TXOP Sharing Mode subfield being 2.
FIG. 20 illustrates an example of a coordinated TDMA operation.
FIG. 21 illustrates an example of CIRP contents and a CIR field format for an A-Control based notify method.
FIG. 22 illustrates an example of a Two TXOPs based C-TDMA procedure using a Notification frame.
FIG. 23 illustrates example 1 of a Two TXOPs based C-TDMA procedure using a Multi-AP selection procedure.
FIG. 24 illustrates example 2 of a Two TXOPs based C-TDMA procedure using a Multi-AP selection procedure.
FIG. 25 illustrates example 1 of Multiple DAPs support in a Two TXOPs based C-TDMA procedure.
FIG. 26 illustrates example 2 of Multiple DAPs support in a Two TXOPs based C-TDMA procedure.
FIG. 27 is a procedural flowchart illustrating an operation of a transmitting apparatus according to the present embodiment.
FIG. 28 is a procedural flowchart illustrating an operation of a receiving apparatus according to the present embodiment.
FIG. 29 is a flowchart illustrating a procedure of a method for performing a C-TDMA operation during a Nominal TXOP duration in terms of a Sharing AP according to the present embodiment.
FIG. 30 is a flowchart illustrating a procedure of a method for performing a C-TDMA operation during a Nominal TXOP duration in terms of a Shared AP according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

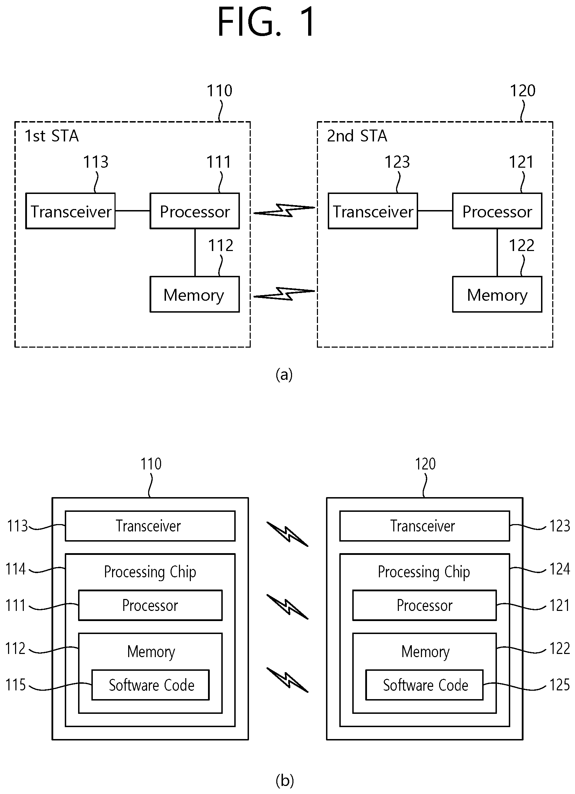

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STAreceives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

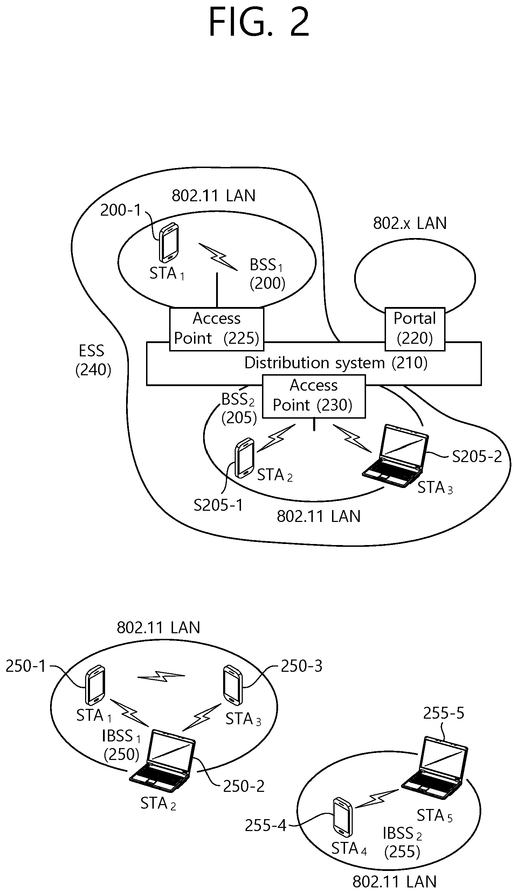

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

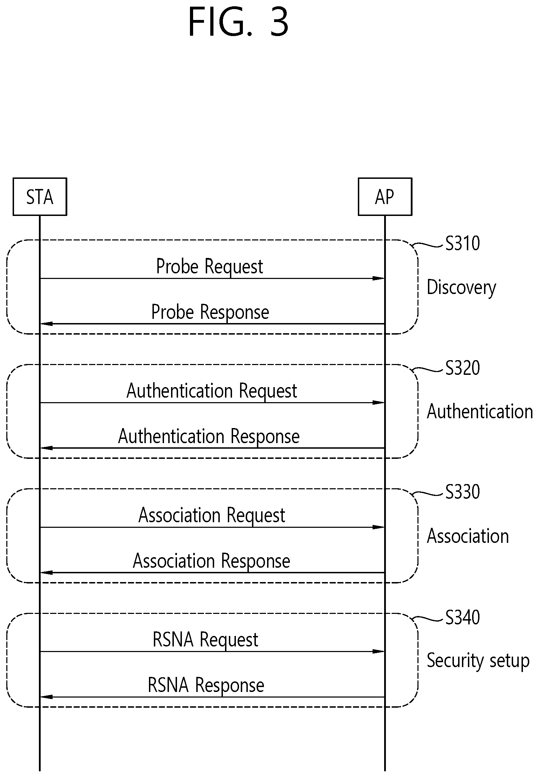

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

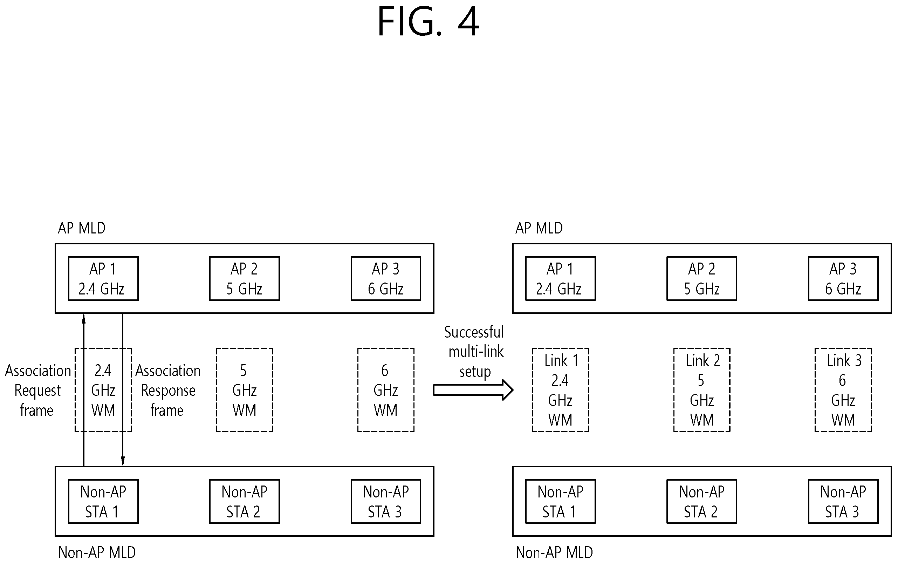

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

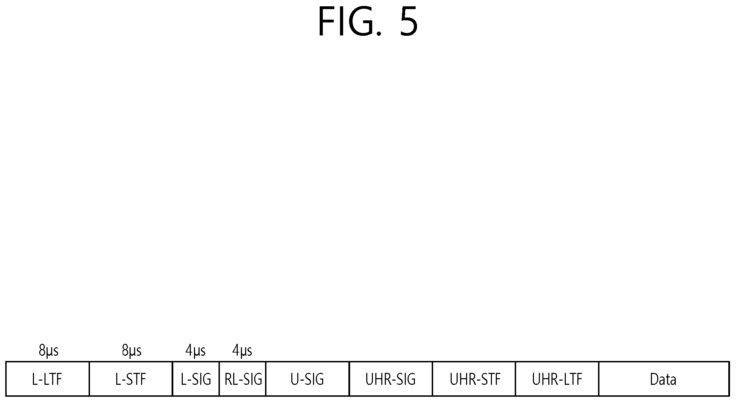

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

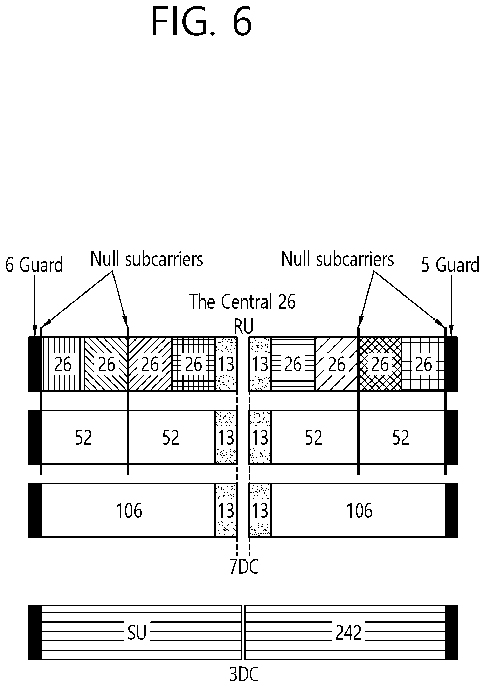

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

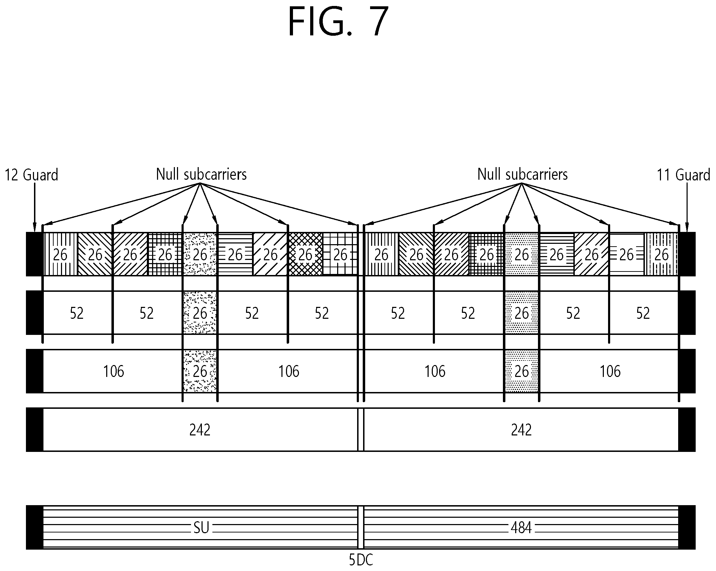

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

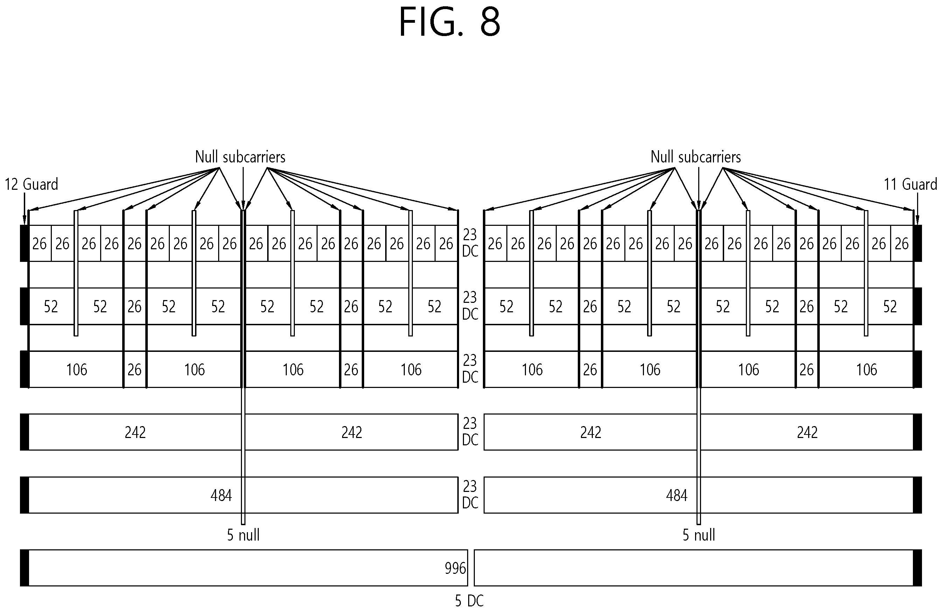

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

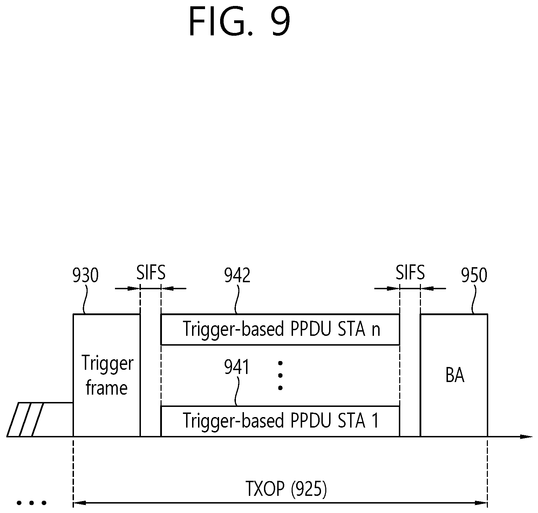

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

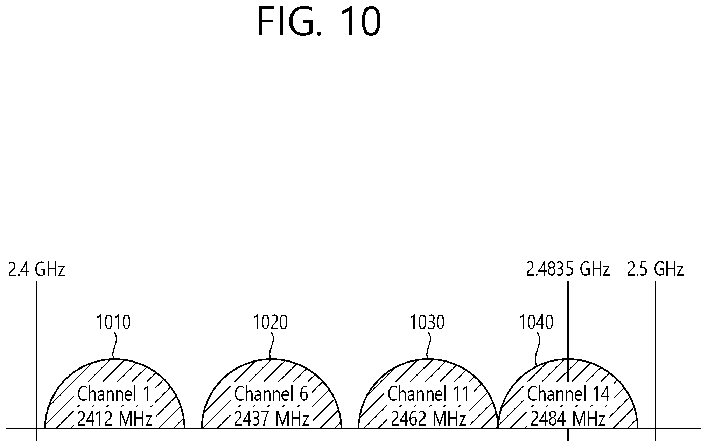

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

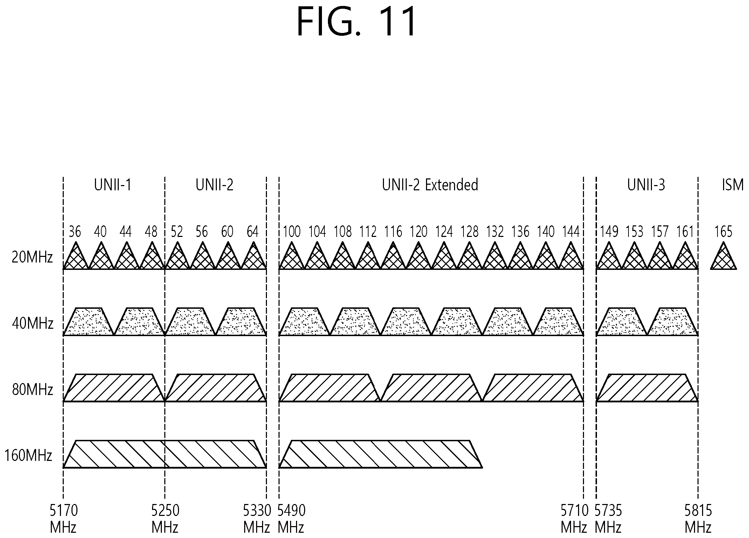

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

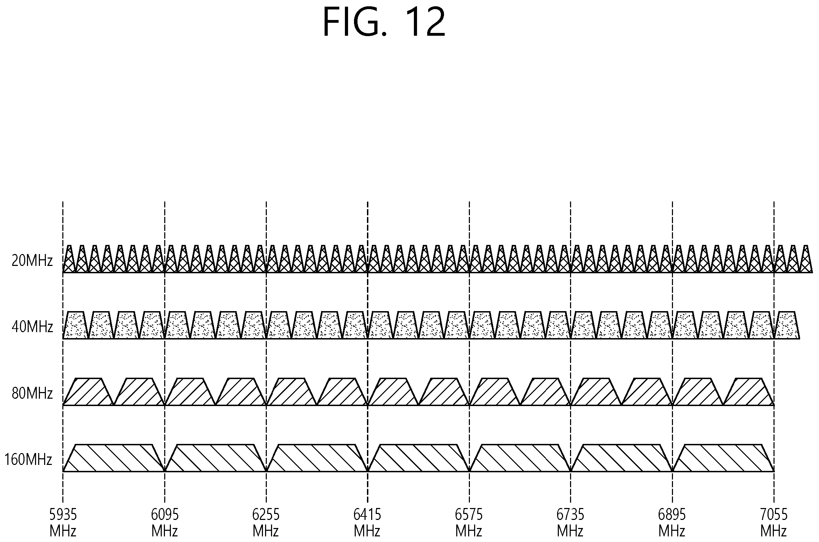

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

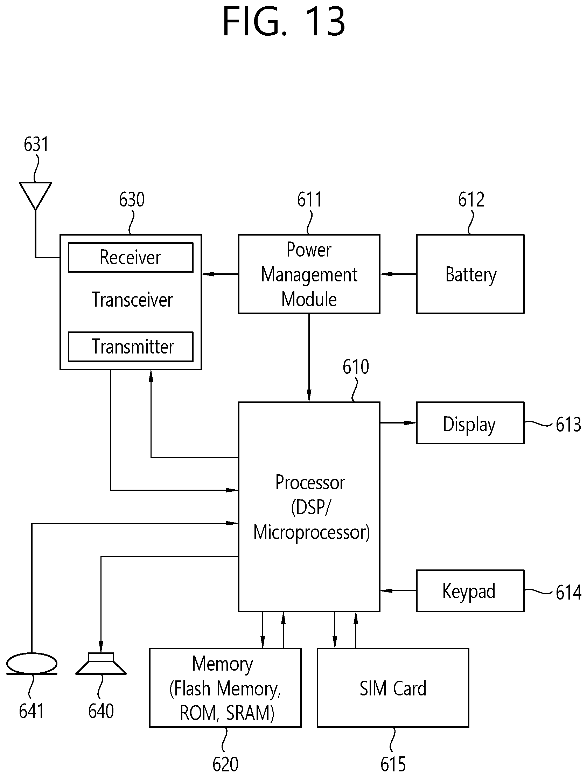

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

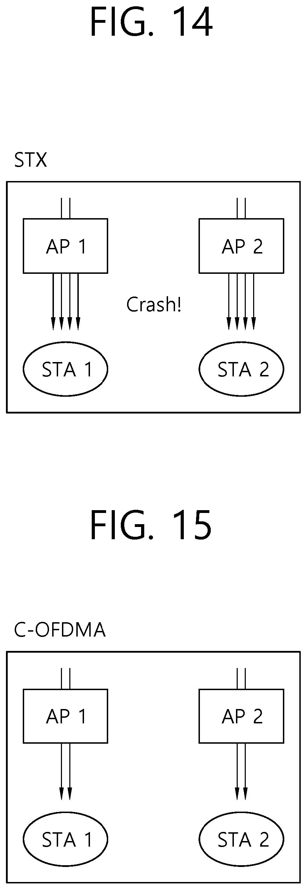

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, andAP2 can transmit a PPDU/signal to STA2. The transmission from AP1 and the transmission fromAP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

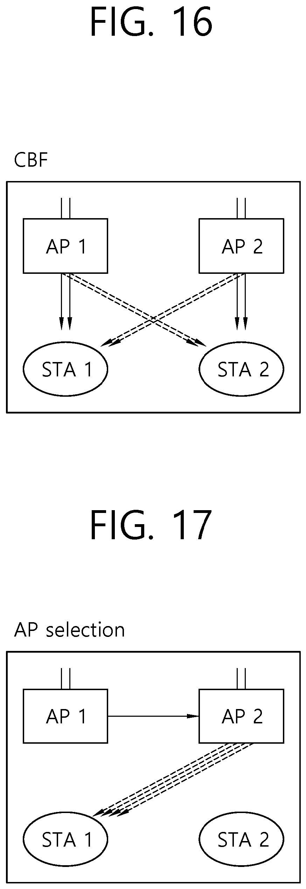

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example ofAP selection. The illustrated AP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

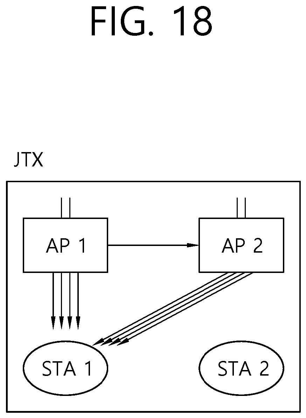

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

### <Embodiments applicable to this specification>

To enable terminals to maintain continuous WLAN connectivity over a wider area, numerous APs are being installed adjacent to each other. However, overlapping BSSs of multiple APs can lead to issues such as radio interference and transmission collisions between APs. To address these issues, various technologies have been proposed to coordinate APs across frequency, time, and spatial domains (e.g., RU selection, joint transmission, nulling, etc.). Furthermore, attention should be paid to the various issues that may arise during inter-AP coordination.

In EHT (802.11be), a technology was proposed to allocate some time within the TXOP acquired by the AP to support peer-to-peer (P2P) transmission to non-AP STAs. To this end, a new TXOP Sharing Mode subfield was defined in the Common Info field of the existing MU-RTS Trigger frame, and the MU-RTS (Multi User-Request To Send) Trigger frame when this value is nonzero is referred to as an MU-RTS TXOP Sharing (TXS) Trigger frame (TF). If the value of the TXOP Sharing mode is 1, the non-AP STA supports one or more (non-TB) PPDU transmissions to the AP, and if the value of the TXOP Sharing mode is 2, the non-AP STA supports P2P transmission in addition to (non-TB) PPDU transmissions to the AP.

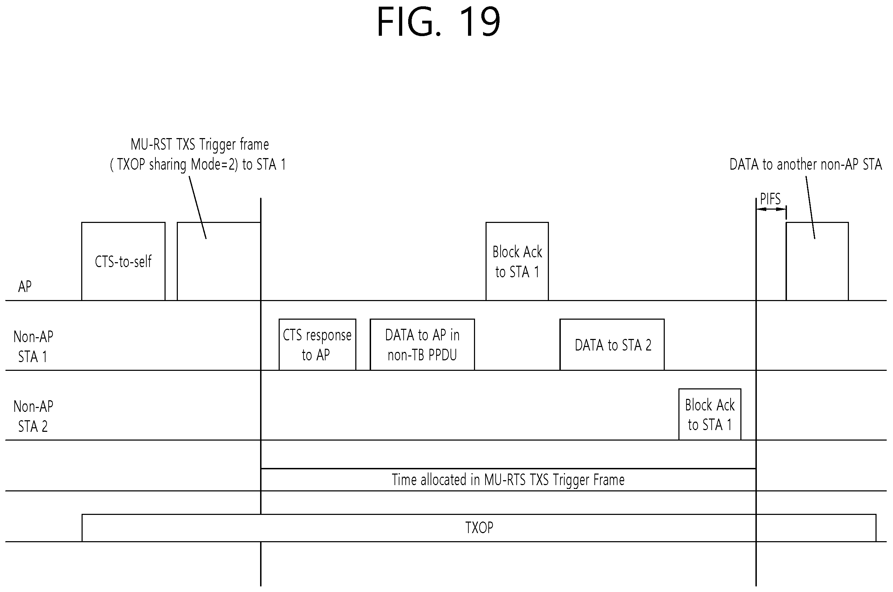

FIG. 19 illustrates an example of an operation of an MU-RTS TXS trigger frame based on a value of a TXOP Sharing Mode subfield being 2.

FIG. 19 illustrates an example of an operation based on a TXOP Sharing mode value being 2. Based on an AP transmitting an MU-RTS TXS TF including time allocation information (Time allocated in MU-RTS TXS Trigger Frame in FIG. 19) to a non-AP STA 1, the non-AP STA 1 may perform a P2P transmission to a non-AP STA 2 after responding with a Clear-To-Send (CTS).

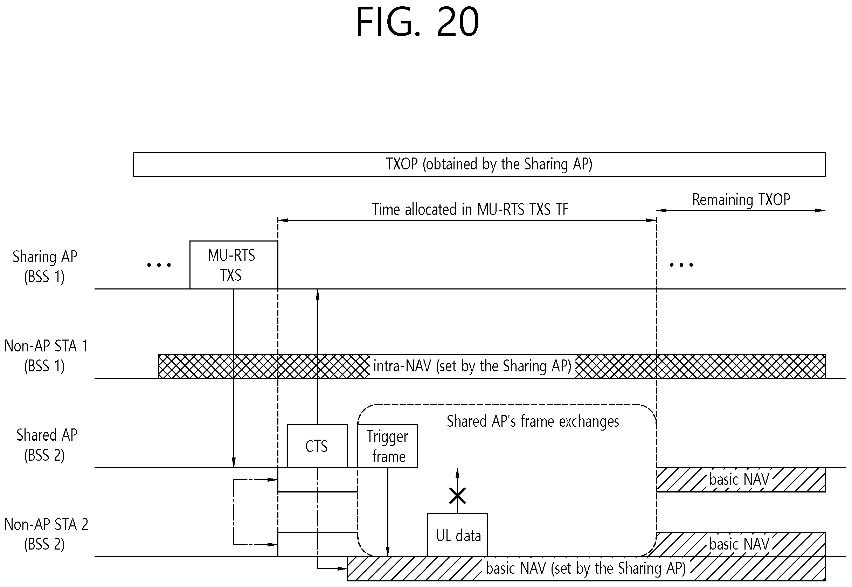

FIG. 20 illustrates an example of a coordinated TDMA operation.

Meanwhile, based on utilizing a conventional Triggered TXOP Sharing protocol for Multi-AP coordination, frame exchange may be performed without affecting each other by distinguishing transmissions within a BSS of each coordinated AP in units of time. For example, FIG. 20 illustrates an example of Coordinated-Time Division Multiplexing Access (C-TDMA) according to a time unit among coordination methods between coordinated APs. At this time, an AP in the conventional Triggered TXS protocol plays a role of an AP sharing a TXOP in a Multi-AP coordination operation, and an STA in the conventional Triggered TXS protocol may play a role of an AP with which the TXOP is shared in the Multi-AP coordination operation. In the present disclosure, an AP sharing a TXOP is referred to as a Sharing AP (SAP), and an AP provided with the TXOP from the SAP is referred to as a Shared AP (DAP). Here, the SAP sharing the TXOP is not limited only to an AP STA and may include a non-AP STA sharing the TXOP. In addition, the DAP with which the TXOP is shared is not limited only to an AP STA and may include a non-AP STA with which the TXOP is shared (or which performs transmission and reception with an AP STA with which the TXOP is shared). Also, a frame exchange between the DAP and a non-AP STA belonging to a DAP BSS or the SAP during a time allocated to the DAP is referred to as a BSS frame exchange (FE) of the DAP. For example, RTS/CTS frame exchange between the DAP and a non-AP STA followed by data frame transmission and block ACK frame response, UL data frame transmission of non-AP STAs for a trigger frame delivered from the DAP or data frame transmission of the DAP for a trigger frame delivered from the SAP may be performed as a frame exchange.

### 1. Problem

In a conventional Triggered Transmit Opportunity (TXOP) Sharing protocol, since a TXOP is shared with a non-AP STA within the same BSS within the TXOP acquired by an AP, an entity with which the TXOP is shared (i.e., non-AP STA) is protected from a Network Allocation Vector (NAV) of an entity sharing the TXOP (i.e., AP). Specifically, STAs belonging to the BSS of the AP receive or sense a frame transmitted from the AP and set an intra-BSS NAV, and STAs not belonging to the BSS of the AP set a basic NAV. On the other hand, in an example of the C-TDMA operation illustrated in FIG. 20, an entity sharing a TXOP (i.e., SAP) and an entity with which the TXOP is shared (i.e., DAP) are APs having different BSSs. For example, based on frame transmission within the BSS of the SAP, STAs within the BSS of the DAP may set a basic NAV and may not be able to smoothly perform a Frame Exchange (FE) with the DAP; therefore, a protection rule related to NAV setting should be sophisticatedly applied for smooth coordination between APs and FE within each BSS. In particular, non-AP STAs connected to the DAP may set a basic NAV for the SAP by receiving or sensing a frame transmitted from the SAP or non-AP STAs connected to the SAP and a CTS frame transmitted from the DAP. However, a problem may occur in which non-AP STAs (connected to the DAP) cannot transmit an UL PPDU/frame to the DAP due to this.

Accordingly, the present disclosure proposes a method for performing a C-TDMA procedure by utilizing two TXOPs.

Based on the C-TDMA operation procedure proposed in the present disclosure, the DAP and some non-AP STAs within the BSS of the DAP may perform a frame exchange with the DAP without being affected by the NAV of the SAP. For example, based on receiving a Trigger frame to which a resource (e.g., Resource Unit (RU)) for enabling transmission of a PPDU/frame by themselves is allocated from the DAP, associated STAs of the DAP may transmit the PPDU/frame without the influence of the NAV. Specific designations (names) proposed in the present disclosure may be changed and are not limited.

### 2. Method for performing C-TDMA procedure by utilizing two TXOPs

The present disclosure describes APs performing C-TDMA by utilizing two TXOPs in a Multi-AP environment. Specifically, a new rule is defined so that TXOP sharing and TXOP return procedures may proceed smoothly by acquiring a TXOP from SAP to DAP and from DAP to SAP among coordinated APs operating in C-TDMA. At this time, APs participating in C-TDMA follow the corresponding rule based on two TXOPs.

The TXOP sharing procedure in C-TDMA according to the present disclosure means that FE may be performed without interference with each other during a TXOP duration acquired by the SAP or shared by the DAP from the SAP. For example, an AP acting as an SAP by acquiring a TXOP may perform TXOP sharing so that the DAP acquires the TXOP so that the DAP and non-AP STAs connected to the DAP do not set a NAV based on an FE individually performed within its own BSS. In addition, based on expiration of a time allocated to itself, the DAP that has acquired the TXOP may perform a TXOP return procedure so that the SAP that shared the TXOP may acquire the TXOP again.

C-TDMA based on two TXOPs proposed in the present disclosure may be defined and operate as follows.

### 2.1 Definition of Two TXOPs

This section defines a new TXOP utilized for the purpose of granting authority so that a subsequent coordinated AP may continuously acquire a TXOP. The new TXOP proposed in the present disclosure and the conventional TXOP are referred to as follows. Specific designations (names) proposed in the present disclosure may be changed and are not limited.
i) Basic TXOP duration (actual TXOP): It may be considered as a period acting as a conventional TXOP. For example, as a basic TXOP, it is a value included in a Duration/ID field of each frame, and STAs receiving the corresponding frame may set a period corresponding to the Basic TXOP duration value as a NAV.
ii) Nominal TXOP duration (virtual TXOP): It may be defined as a period during which APs participating in the C-TDMA operation proposed in the present disclosure cooperate with each other and perform individual FE and TXOP sharing (or) a nominal TXOP period scheduled by the SAP for the C-TDMA operation. For example, the Nominal TXOP duration may be considered as an overall TXOP duration for general Multiple frame exchange sequences required/expected for TXOP sharing and individual FE between APs participating in C-TDMA, which is less than or equal to a TXOP limit. Specifically, an overall duration including a TXOP duration for an individual FE of the SAP, a procedure in which the SAP performs TXOP sharing to the DAP, a TXOP duration in which the DAP performs an individual FE, a procedure in which the DAP performs TXOP return to the SAP and a TXOP duration that the SAP may acquire again when the TXOP return from the DAP is successful may be considered as the Nominal TXOP duration. The Nominal TXOP duration is a value that is not actually reflected/utilized in NAV setting, and among the coordinated APs (SAP and DAPs) participating in C-TDMA, a DAP scheduled to be shared with a TXOP is utilized for the purpose of acquiring its own Basic TXOP duration immediately after the Basic TXOP duration of the coordinated AP within the corresponding Nominal TXOP duration is terminated. In addition, based on not being shared with a TXOP within the Nominal TXOP duration notified from the SAP, coordinated APs (i.e., coordinated APs that do not acquire a TXOP during the Nominal TXOP duration) may defer channel access during a time allocated to another DAP or may perform a backoff for primary or secondary channel access for a time shorter than the allocated time.

In addition, the above-described Nominal TXOP duration is limited to a TXOP limit (or maximum TXOP duration) defined in a standard, and is designed/defined for the purpose of performing TXOP sharing of C-TDMA sequentially/continuously by distinguishing it into a plurality of TXOPs (Basic TXOP duration) within the Nominal TXOP duration.

### 2.2 Notify method of Nominal TXOP

This section newly proposes a method for notifying information related to the Nominal TXOP duration and C-TDMA operation defined in section 2.1 and a frame including such information. Specific designations (names) proposed in the present disclosure may be changed and are not limited.

### 2.2.1 Unilateral instruction based Notify method

An AP performing a role of an SAP by acquiring a TXOP may transmit a frame that does not solicit a response frame to a target DAP to which a TXOP is to be shared. For example, it may be considered as unilaterally instructing/notifying the Nominal TXOP duration and related contents to the target DAP. The frame at this time collectively refers to reusing a structure and a specific type of a conventional Basic Trigger frame, defining a new type of Trigger frame or defining a new Control frame or Management frame.

As an example of a Notification frame transmitted based on this section (2.2.1. Unilateral instruction based Notify method), a Management frame including the following contents may be newly defined. The corresponding Notification frame may include contents based on one or a plurality of combinations of the following contents, and their designations (names) may be changed and are not limited.

First, a notification frame transmitted based on 2.2.1. Unilateral instruction based Notify method may be classified as an Action frame among types of Management frames. In addition, the notification frame may be classified as a UHR Action frame or a Protected UHR Action frame that may be newly defined in UHR (802.11bn), similar to an EHT Action frame and a Protected EHT Action frame newly defined in EHT (802.11be) among Category types of Action frames. For example, the above-described notification frame may be defined as one Action frame among types using an Action field of a UHR Action frame or a Protected UHR Action frame.

Additionally or alternatively, a new Public Action frame for delivering a Nominal TXOP duration or for a C-TDMA operation may be defined.

Therefore, an AP performing a role of an SAP by acquiring a TXOP may transmit a notification frame to indicate to a target DAP that TXOP sharing for a C-TDMA operation is scheduled, and may include Nominal TXOP duration information in this frame.

An Action field of a Notification frame may include information based on one or a plurality of combinations below. Names of information defined below may be changed and are not limited.
A. Category: A value indicating a Category field defined in an Action field of an Action frame among Management frames
   -> For example, a value indicating an EHT Action frame or a Protected EHT Action frame among 1-byte Category fields. Specifically, a value indicating a UHR Action frame or a Protected UHR Action frame that may be newly defined in UHR.
B. UHR Action (or) Protected UHR Action (or) Public Action: A value indicating an action to be performed with the corresponding frame
   -> For example, a value indicating a Link Reconfiguration Notify frame (example) among 1-byte Action fields in a Protected EHT Action frame. Specifically, a C-TDMA Operation Notification frame is newly defined and indicated among 1-byte Action fields in a UHR Action frame or a Protected UHR Action frame that may be newly defined in UHR.
C. Multi-AP group ID: An ID for a set of APs that have configured Multi-AP coordination (e.g., 0, 1, 2, ...)
D. DAP ID: An ID assigned from the SAP within the configured Multi-AP group (e.g., 0, 1, 2, ...)
E. SAP capability: Indicates a capability as to whether the corresponding AP may operate as an SAP
   -> For example, a QoS Characteristic element included in an SCS request/response frame is utilized. For example, Reserved bits (3 bits) in a Control Info field of a QoS Characteristic element are used. Specifically, a 1-bit signaling for indicating SAP capability information among the corresponding Reserved bits is defined.
      bit 0: indicates that the corresponding AP cannot operate as an SAP
      bit 1: indicates that the corresponding AP has a capability to operate as an SAP
         For example, a Common Info field included in a Trigger frame is utilized. For example, EHT Reserved (7 bits) or Reserved bits (4 bits) of a Common Info field are used. Specifically, a new subfield for Multi-AP coordination is defined using EHT Reserved, and a 1-bit signaling for indicating SAP capability information within the corresponding subfield is defined. Specifically, a 1-bit signaling for indicating SAP capability information is defined using Reserved bits in a Common Info field.
F. SAP operation signaling: Indicates that the corresponding AP currently operates as an SAP and shares a TXOP with a DAP
   -> For example, a QoS Characteristic element included in a QoS data frame is utilized. For example, Reserved bits (3 bits) in a Control Info field of a QoS Characteristic element are used. Specifically, a 1-bit signaling for indicating SAP operation signaling information among the corresponding Reserved bits is defined.
      bit 0: indicates that the corresponding AP plays a role of an SAP but does not perform TXOP sharing
      bit 1: indicates that the corresponding AP plays a role of an SAP and performs TXOP sharing to a DAP
         For example, a Common Info field included in a Trigger frame is utilized. For example, EHT Reserved (7 bits) or Reserved bits (4 bits) of a Common Info field are used. Specifically, a new subfield for Multi-AP coordination is defined based on utilizing EHT Reserved, and a 1-bit signaling for indicating SAP operation signaling information within the corresponding subfield is defined. Specifically, a 1-bit signaling for indicating SAP operation signaling information is defined based on utilizing Reserved bits in a Common Info field.
G. Multi-AP coordination type: Information on Multi-AP cooperative transmission schemes such as C-OFDMA, C-TDMA, J-TX and C-SR.
H. Address: Address information of a DAP which is a target for sharing a TXOP among participating APs (e.g., BSS color, BSSID for Multi-AP or the above-defined A and B information).
I. Operating channel: Information on an operating primary channel and a punctured channel.
   -> For example, information on a channel commonly operating for smooth coordination between APs participating in C-TDMA. For example, primary channel information in which APs participating in C-TDMA may commonly operate. Specifically, a new field playing a role of a CCSFO field in an EHT Operation Information field may be defined to indicate a channel center frequency index for a 20/40/80 MHz channel.

Specifically, a new field playing a role of a CCSFO field in an EHT Operation Information field may be defined to indicate a channel center frequency for a primary 80 MHz channel of a 160 MHz channel or a channel center frequency for a primary 160 MHz channel of a 320 MHz channel.

Also, a new field playing a role of a CCSF1 field in an EHT Operation Information field may be defined to indicate a channel center frequency for a 160 MHz channel or a channel center frequency for a 320 MHz channel.
-> For example, punctured channel information of an AP participating in C-TDMA.

Specifically, a new field playing a role of a Disabled Subchannel Bitmap field in an EHT Operation Information field may be defined to indicate a punctured 20 MHz subchannel based on utilizing a bitmap.

A bit value of 0 in the bitmap: indicates that a corresponding 20 MHz subchannel is not punctured.

A bit value of 1 in the bitmap: indicates that a corresponding 20 MHz subchannel is punctured.

A primary channel of a DAP may be included within a channel in which an SAP operates.

A primary channel of a DAP may be included within an operating channel excluding a punctured channel of an SAP.

J. Operating bandwidth: Information on an operating bandwidth and a maximum bandwidth.
-> For example, BW information commonly operating for smooth coordination between APs participating in C-TDMA. Specifically, the above-described Operating channel and primary channel information may be utilized.

For example, maximum bandwidth information of an AP participating in C-TDMA. Specifically, a new field playing a role such as a Channel Width field in a Control field of an EHT Operation Information field may be defined to indicate a channel width which is BSS BW information of each AP.

Set to 0: indicates 20 MHz bandwidth.

Set to 1: indicates 40 MHz bandwidth.

Set to 2: indicates 80 MHz bandwidth.

Set to 3: indicates 160/80+80 MHz bandwidth.

Set to 4: indicates 320/160+160 MHz bandwidth.

Values from remaining 5 to 7 may be reserved.
-> For example, BW field information in a SIG-A field.
-> For example, UL BW field information included in a Common Info field of an MU-RTS TXS TF.

A bandwidth of a DAP may be included within an overall bandwidth in which an SAP operates.
-> For example, a field for bandwidth indication may be newly added based on changing/redefining to include a new sub-field within a Medium Time field of a QoS Characteristics element. Specifically, a new field playing a role such as a Channel Width field in a Control field of an EHT Operation Information field may be defined to indicate a channel width which is BSS BW information of each AP.

Set to 0: indicates 20 MHz bandwidth.

Set to 1: indicates 40 MHz bandwidth.

Set to 2: indicates 80 MHz bandwidth.

Set to 3: indicates 160/80+80 MHz bandwidth.

Set to 4: indicates 320/160+160 MHz bandwidth.

Values from remaining 5 to 7 may be reserved.

K. Scheduled TXOP duration (Nominal TXOP duration): A period during which APs participating in a C-TDMA operation cooperate with each other and perform individual FE and TXOP sharing (or) a nominal TXOP period scheduled by an SAP for the C-TDMA operation.
-> For example, it is indicated based on defining a new field including a Scheduled TXOP duration. Specifically, a Scheduled duration field (tentative name) is newly defined to indicate information necessary for a C-TDMA operation and a Scheduled TXOP duration value.
-> For example, it is indicated based on defining a new element including a Scheduled TXOP duration. Specifically, a C-TDMA Operation element (tentative name) is newly defined to indicate information necessary for a C-TDMA operation and a Scheduled TXOP duration value.
-> For example, it is indicated based on including a Scheduled TXOP duration within a QoS Characteristic element that may be used to include negotiation information in a pre-negotiation process for a C-TDMA operation or an element that may be newly defined for negotiation in C-TDMA.
-> For example, it is indicated based on including a Scheduled TXOP duration within a UHR Operation element that may be used to include announcement information in an announcement process of each AP for a C-TDMA operation or an element that may be newly defined for announcement in C-TDMA.

L. Expected TXOP sharing timing: A TXOP sharing timing expected or scheduled by an SAP.
-> For example, it is indicated based on defining a new field including an Expected TXOP sharing timing. Specifically, an Expected TXOP sharing timing field (tentative name) is newly defined to indicate information necessary for a C-TDMA operation and an Expected TXOP sharing timing value.
-> For example, it is indicated based on defining a new element including an Expected TXOP sharing timing. Specifically, a C-TDMA Operation element (tentative name) is newly defined to indicate information necessary for a C-TDMA operation and an Expected sharing timing value.

M. Low Latency Traffic Information: Information related to Low Latency Traffic that each AP intends to transmit and receive.
-> For example, information of a QoS Characteristic element included in an SCS request/response frame. For example, Delay Bound field information among information of a QoS Characteristic element is utilized. Specifically, a Delay Bound field value for QoS traffic that each AP intends to transmit may be utilized as Low Latency Traffic information. Based on this, the SAP may utilize it to check whether TXOP sharing is necessary for a DAP that may complete transmission of an MSDU or A-MSDU within a timing when a TXOP duration to be shared ends (i.e., pre-negotiated Low Latency Traffic information or a Delay Bound field value is shorter than an allocated time) or to update a conventional value.
-> For example, MSDU Lifetime field information among information of a QoS Characteristic element is utilized. Specifically, an MSDU Lifetime field value for QoS traffic that each AP intends to transmit may be utilized as Low Latency Traffic information. Based on this, the SAP may utilize it to check whether TXOP sharing is necessary for a DAP that does not discard an MSDU within a timing when a TXOP duration to be shared ends (i.e., pre-negotiated Low Latency Traffic information or an MSDU Lifetime field value is not expired within an allocated time) or to update a conventional value.
-> For example, Service Start Time field information among information of a QoS Characteristic element is utilized. Specifically, a Service Start Time field value for QoS traffic that each AP intends to transmit may be utilized as Low Latency Traffic information. Based on this, the SAP may utilize it to check whether TXOP sharing is necessary for a DAP that may start an expected Service Period and frame exchange within a timing when a TXOP duration to be shared ends (i.e., pre-negotiated Low Latency Traffic information or a Service Start Time field value is shorter than an allocated time) or to update a conventional value.
-> For example, TXOP sharing request information required/indicated by an AP requiring transmission of Low Latency Traffic. For example, time-bound information of Low Latency Traffic required/indicated by an AP requiring transmission of Low Latency Traffic. For example, a minimum time-bound at which transmission of Low Latency Traffic should start. For example, a maximum time-bound at which transmission of Low Latency Traffic should be successfully finished.
-> For example, arrival rate information of Low Latency Traffic required/indicated by an AP requiring periodic transmission of Low Latency Traffic. For example, an arrival rate of Low Latency Traffic after a last reporting event.

Alternatively, a new element (e.g., UHR Operation element, C-TDMA Operation element, Multi-AP Coordination element) may be defined to include the above-described contents of C to I required for Multi-AP coordination and C-TDMA operation.

Therefore, as one example (i.e., Management frame) for the notification frame defined in this section, the above-described Action field may be illustrated as an example as shown in Table 1 below.

**[Table 1]**

| **Order** | **Meaning** |
|---|---|
| 1 | Category |
| 2 | UHR Action (or) Protected UHR Action (or) Public Action |
| 3 | A new field including a Nominal TXOP duration (or) a new element for a Notification frame (or) a new element for negotiation (or) a new element for announcement |

The Nominal TXOP duration information described above in section 2.1 may not only be included in a notification frame, but may also be included in a UHR Operation element of a Management frame (e.g., Beacon) conventionally delivered by each AP or included in a new element for C-TDMA by defining the new element. In addition, it is assumed that it may be included by being defined as a new field or signaling bits in a Trigger frame (or Control frame or data frame) transmitted by an AP.

For example, the Nominal TXOP duration information is not limited to being included only in the notification frame newly proposed in this section, and it is assumed that the corresponding information may be notified to a corresponding DAP within a Basic TXOP duration acquired by an SAP. At this time, a frame other than the Notification frame may include information based on one or a plurality of combinations of the above-described information (A to L) excluding A and B. A specific notify method using Multi-AP selection frames other than the notification frame proposed in this section is dealt with in the following sections (2.2.2, 2.2.3 and 2.2.4).

### 2.2.2 Request/Response based Notify method

An AP performing a role of an SAP may transmit a frame (i.e., Selection Request frame) soliciting a response frame to a target DAP to which a TXOP is to be shared, and may include a Nominal TXOP duration in the corresponding frame. In this subclause, the frame is referred to as a selection request frame, and a response frame thereto is referred to as a selection response frame, and names may be changed. The frame at this time collectively refers to reusing a structure and a specific type of a conventional Basic Trigger frame, defining a new type of Trigger frame or defining a new Control frame or Management frame.

The selection request frame proposed in this section may include contents based on one or a plurality of combinations of the contents below. Designations (names) of contents defined below may be changed and are not limited.
A. Multi-AP group ID: An ID for a set of APs that have configured Multi-AP coordination (e.g., 0, 1, 2, ...)
B. DAP ID: An ID assigned from an SAP within a configured Multi-AP group (e.g., 0, 1, 2, ...)
C. SAP capability: Indicates a capability as to whether a corresponding AP may operate as an SAP

For example, a QoS Characteristic element included in an SCS request/response frame is utilized. For example, Reserved bits (3 bits) in a Control Info field of a QoS Characteristic element are used. Specifically, a 1-bit signaling for indicating SAP capability information among the corresponding Reserved bits is defined.
bit 0: indicates that the corresponding AP cannot operate as an SAP
bit 1: indicates that the corresponding AP has a capability to operate as an SAP

For example, a Common Info field included in a Trigger frame is utilized. For example, EHT Reserved (7 bits) or Reserved bits (4 bits) of a Common Info field are used. Specifically, a new subfield for Multi-AP coordination is defined based on utilizing EHT Reserved, and a 1-bit signaling for indicating SAP capability information within the corresponding subfield is defined. Specifically, a 1-bit signaling for indicating SAP capability information is defined based on utilizing Reserved bits in a Common Info field.
D. SAP operation signaling: Indicates that a corresponding AP currently operates as an SAP and shares a TXOP with a DAP
   -> For example, a QoS Characteristic element included in a QoS data frame is utilized. For example, Reserved bits (3 bits) in a Control Info field of a QoS Characteristic element are used. Specifically, a 1-bit signaling for indicating SAP operation signaling information among the corresponding Reserved bits is defined.
      bit 0: indicates that the corresponding AP plays a role of an SAP but does not perform TXOP sharing
      bit 1: indicates that the corresponding AP plays a role of an SAP and performs TXOP sharing to a DAP
   -> For example, a Common Info field included in a Trigger frame is utilized. For example, EHT Reserved (7 bits) or Reserved bits (4 bits) of a Common Info field are used. Specifically, a new subfield for Multi-AP coordination is defined based on utilizing EHT Reserved, and a 1-bit signaling for indicating SAP operation signaling information within the corresponding subfield is defined. Specifically, a 1-bit signaling for indicating SAP operation signaling information is defined based on utilizing Reserved bits in a Common Info field.
E. Multi-AP coordination type: Information on Multi-AP cooperative transmission schemes such as C-OFDMA, C-TDMA, J-TX and C-SR.
F. Address: Address information of a DAP which is a target for sharing a TXOP among participating APs (e.g., BSS color, BSSID for Multi-AP or the above-defined A and B information).
G. Operating channel: Information on an operating primary channel and a punctured channel.
   -> For example, information on a channel commonly operating for smooth coordination between APs participating in C-TDMA.
   -> For example, primary channel information in which APs participating in C-TDMA may commonly operate. Specifically, a new field playing a role of a CCSFO field in an EHT Operation Information field may be defined to indicate a channel center frequency index for a 20/40/80 MHz channel.

Specifically, a new field playing a role of a CCSFO field in an EHT Operation Information field may be defined to indicate a channel center frequency for a primary 80 MHz channel of a 160 MHz channel or a channel center frequency for a primary 160 MHz channel of a 320 MHz channel.

Also, a new field playing a role of a CCSF1 field in an EHT Operation Information field may be defined to indicate a channel center frequency for a 160 MHz channel or a channel center frequency for a 320 MHz channel.
-> For example, punctured channel information of an AP participating in C-TDMA. Specifically, a new field playing a role of a Disabled Subchannel Bitmap field in an EHT Operation Information field may be defined to indicate a punctured 20 MHz subchannel based on utilizing a bitmap.

A bit value of 0 in the bitmap: indicates that a corresponding 20 MHz subchannel is not punctured.

A bit value of 1 in the bitmap: indicates that a corresponding 20 MHz subchannel is punctured.

A primary channel of a DAP may be included within a channel in which an SAP operates.

A primary channel of a DAP may be included within an operating channel excluding a punctured channel of an SAP.

H. Operating bandwidth: Information on an operating bandwidth and a maximum bandwidth.
-> For example, BW information commonly operating for smooth coordination between APs participating in C-TDMA. Specifically, the above-described Operating channel and primary channel information may be utilized.
-> For example, maximum bandwidth information of an AP participating in C-TDMA. Specifically, a new field playing a role such as a Channel Width field in a Control field of an EHT Operation Information field may be defined to indicate a channel width which is BSS BW information of each AP.

Set to 0: indicates 20 MHz bandwidth.

Set to 1: indicates 40 MHz bandwidth.

Set to 2: indicates 80 MHz bandwidth.

Set to 3: indicates 160/80+80 MHz bandwidth.

Set to 4: indicates 320/160+160 MHz bandwidth.

Values from remaining 5 to 7 may be reserved.
-> For example, BW field information in a SIG-A field.
-> For example, UL BW field information included in a Common Info field of an MU-RTS TXS TF.

A bandwidth of a DAP may be included within an overall bandwidth in which an SAP operates.

For example, a field for bandwidth indication may be newly added based on changing/redefining to include a new sub-field within a Medium Time field of a QoS Characteristics element. Specifically, a new field playing a role such as a Channel Width field in a Control field of an EHT Operation Information field may be defined to indicate a channel width which is BSS BW information of each AP.

Set to 0: indicates 20 MHz bandwidth.

Set to 1: indicates 40 MHz bandwidth.

Set to 2: indicates 80 MHz bandwidth.

Set to 3: indicates 160/80+80 MHz bandwidth.

Set to 4: indicates 320/160+160 MHz bandwidth.

Values from remaining 5 to 7 may be reserved.
I. Scheduled TXOP duration (Nominal TXOP duration): A period during which APs participating in a C-TDMA operation cooperate with each other and perform individual FE and TXOP sharing (or) a nominal TXOP period scheduled by an SAP for the C-TDMA operation.
   -> For example, it is indicated based on defining a new field including a Scheduled TXOP duration. Specifically, a Scheduled duration field (tentative name) is newly defined to indicate information necessary for a C-TDMA operation and a Scheduled TXOP duration value.
   -> For example, it is indicated based on defining a new element including a Scheduled TXOP duration. Specifically, a C-TDMA Operation element (tentative name) is newly defined to indicate information necessary for a C-TDMA operation and a Scheduled TXOP duration value.
   -> For example, it is indicated based on including a Scheduled TXOP duration within a QoS Characteristic element that may be used to include negotiation information in a pre-negotiation process for a C-TDMA operation or an element that may be newly defined for negotiation in C-TDMA.
   -> For example, it is indicated based on including a Scheduled TXOP duration within a UHR Operation element that may be used to include announcement information in an announcement process of each AP for a C-TDMA operation or an element that may be newly defined for announcement in C-TDMA.
J. Expected TXOP sharing timing: A TXOP sharing timing expected or scheduled by an SAP.
   -> For example, it is indicated based on defining a new field including an Expected TXOP sharing timing. Specifically, an Expected TXOP sharing timing field (tentative name) is newly defined to indicate information necessary for a C-TDMA operation and an Expected TXOP sharing timing value.
   -> For example, it is indicated based on defining a new element including an Expected TXOP sharing timing. Specifically, a C-TDMA Operation element (tentative name) is newly defined to indicate information necessary for a C-TDMA operation and an Expected sharing timing value.
K. Low Latency Traffic Information: Information related to Low Latency Traffic that each AP intends to transmit and receive.
   -> For example, information of a QoS Characteristic element included in an SCS request/response frame. For example, Delay Bound field information among information of a QoS Characteristic element is utilized. Specifically, a Delay Bound field value for QoS traffic that each AP intends to transmit may be utilized as Low Latency Traffic information. Based on this, the SAP may utilize it to check whether TXOP sharing is necessary for a DAP that may complete transmission of an MSDU or A-MSDU within a timing when a TXOP duration to be shared ends (i.e., pre-negotiated Low Latency Traffic information or a Delay Bound field value is shorter than an allocated time) or to update a conventional value.
   -> For example, MSDU Lifetime field information among information of a QoS Characteristic element is utilized. Specifically, an MSDU Lifetime field value for QoS traffic that each AP intends to transmit may be utilized as Low Latency Traffic information. Based on this, the SAP may utilize it to check whether TXOP sharing is necessary for a DAP that does not discard an MSDU within a timing when a TXOP duration to be shared ends (i.e., pre-negotiated Low Latency Traffic information or an MSDU Lifetime field value is not expired within an allocated time) or to update a conventional value.
   -> For example, Service Start Time field information among information of a QoS Characteristic element is utilized. Specifically, a Service Start Time field value for QoS traffic that each AP intends to transmit may be utilized as Low Latency Traffic information. Based on this, the SAP may utilize it to check whether TXOP sharing is necessary for a DAP that may start an expected Service Period and frame exchange within a timing when a TXOP duration to be shared ends (i.e., pre-negotiated Low Latency Traffic information or a Service Start Time field value is shorter than an allocated time) or to update a conventional value.

For example, TXOP sharing request information required/indicated by an AP requiring transmission of Low Latency Traffic.

For example, time-bound information of Low Latency Traffic required/indicated by an AP requiring transmission of Low Latency Traffic. For example, a minimum time-bound at which transmission of Low Latency Traffic should start.

For example, a maximum time-bound at which transmission of Low Latency Traffic should be successfully finished. For example, arrival rate information of Low Latency Traffic required/indicated by an AP requiring periodic transmission of Low Latency Traffic. For example, an arrival rate of Low Latency Traffic after a last reporting event.

In addition, a selection response frame proposed in this section may include contents based on one or a plurality of combinations of the contents described below, and additionally, information for indicating whether TXOP sharing is necessary and a Status Code may be included. Designations (names) of contents defined below may be changed and are not limited.
A. Multi-AP group ID: An ID for a set of APs that have configured Multi-AP coordination (e.g., 0, 1, 2, ...)
B. DAP ID: An ID assigned from an SAP within a configured Multi-AP group (e.g., 0, 1, 2, ...)
C. Address: Address information of an SAP (e.g., BSS color, BSSID for Multi-AP or the above-defined A and B information)
D. Operating channel: Information on an operating primary channel and a punctured channel.
   -> For example, information on a channel commonly operating for smooth coordination between APs participating in C-TDMA.
   -> For example, primary channel information in which APs participating in C-TDMA may commonly operate. Specifically, a new field playing a role of a CCSFO field in an EHT Operation Information field may be defined to indicate a channel center frequency index for a 20/40/80 MHz channel.

Specifically, a new field playing a role of a CCSFO field in an EHT Operation Information field may be defined to indicate a channel center frequency for a primary 80 MHz channel of a 160 MHz channel or a channel center frequency for a primary 160 MHz channel of a 320 MHz channel.

Also, a new field playing a role of a CCSF1 field in an EHT Operation Information field may be defined to indicate a channel center frequency for a 160 MHz channel or a channel center frequency for a 320 MHz channel.
-> For example, punctured channel information of an AP participating in C-TDMA. Specifically, a new field playing a role of a Disabled Subchannel Bitmap field in an EHT Operation Information field may be defined to indicate a punctured 20 MHz subchannel based on utilizing a bitmap.

A bit value of 0 in the bitmap: indicates that a corresponding 20 MHz subchannel is not punctured.

A bit value of 1 in the bitmap: indicates that a corresponding 20 MHz subchannel is punctured.

A primary channel of a DAP may be included within a channel in which an SAP operates.

A primary channel of a DAP may be included within an operating channel excluding a punctured channel of an SAP.

E. Operating bandwidth: Information on an operating bandwidth and a maximum bandwidth.
-> For example, BW information commonly operating for smooth coordination between APs participating in C-TDMA. Specifically, the above-described Operating channel and primary channel information may be utilized.

For example, maximum bandwidth information of an AP participating in C-TDMA. Specifically, a new field playing a role such as a Channel Width field in a Control field of an EHT Operation Information field may be defined to indicate a channel width which is BSS BW information of each AP.

Set to 0: indicates 20 MHz bandwidth.

Set to 1: indicates 40 MHz bandwidth.

Set to 2: indicates 80 MHz bandwidth.

Set to 3: indicates 160/80+80 MHz bandwidth.

Set to 4: indicates 320/160+160 MHz bandwidth.

Values from remaining 5 to 7 may be reserved.

For example, BW field information in a SIG-A field.

For example, UL BW field information included in a Common Info field of an MU-RTS TXS TF.

A bandwidth of a DAP may be included within an overall bandwidth in which an SAP operates.

For example, a field for bandwidth indication may be newly added based on changing/redefining to include a new sub-field within a Medium Time field of a QoS Characteristics element. Specifically, a new field playing a role such as a Channel Width field in a Control field of an EHT Operation Information field may be defined to indicate a channel width which is BSS BW information of each AP.

Set to 0: indicates 20 MHz bandwidth.

Set to 1: indicates 40 MHz bandwidth.

Set to 2: indicates 80 MHz bandwidth.

Set to 3: indicates 160/80+80 MHz bandwidth.

Set to 4: indicates 320/160+160 MHz bandwidth.

Values from remaining 5 to 7 may be reserved.
F. Required TXOP duration: Information related to a TXOP duration that each DAP wishes to be shared.
   -> For example, it is indicated based on defining a new field including a Required TXOP duration. Specifically, a Required duration field (tentative name) is newly defined to indicate information necessary for a C-TDMA operation and a Required TXOP duration value.
   -> For example, it is indicated based on defining a new element including a Required TXOP duration. Specifically, a C-TDMA Operation element is newly defined to indicate information necessary for a C-TDMA operation and a Required TXOP duration value.
   -> For example, it is indicated based on including a Required TXOP duration within a QoS Characteristic element that may be used to include negotiation information in a pre-negotiation process for a C-TDMA operation or an element that may be newly defined for negotiation in C-TDMA.
   -> For example, it is indicated based on including a Required TXOP duration within a UHR Operation element that may be used to include announcement information in an announcement process of each AP for a C-TDMA operation or an element that may be newly defined for announcement in C-TDMA.
G. Buffer status: Buffer status information of each DAP.
H. TXOP sharing requirement: Indication of whether TXOP sharing is necessary based on expiration of pre-negotiated Low Latency Traffic Information or no need for TXOP sharing (e.g., when individual FE has already been performed).
   -> For example, indication and response of whether TXOP sharing is necessary using 1 bit.
      bit 0: indicates that a DAP receiving a selection request frame does not need TXOP sharing.
      bit 1: indicates that a DAP receiving a selection request frame needs TXOP sharing.
I. Low Latency Traffic Information: Information related to Low Latency Traffic that each AP intends to transmit and receive.
   -> For example, information of a QoS Characteristic element included in an SCS request/response frame. For example, Delay Bound field information among information of a QoS Characteristic element is utilized. Specifically, a Delay Bound field value for QoS traffic that each AP intends to transmit may be utilized as Low Latency Traffic information. It includes updated Low Latency Traffic information or a Delay Bound field value for a case changed differently from pre-negotiated Low Latency Traffic Information.

For example, MSDU Lifetime field information among information of a QoS Characteristic element is utilized. Specifically, an MSDU Lifetime field value for QoS traffic that each AP intends to transmit may be utilized as Low Latency Traffic information. It includes updated Low Latency Traffic information or an MSDU Lifetime field value for a case changed differently from pre-negotiated Low Latency Traffic Information.

For example, Service Start Time field information among information of a QoS Characteristic element is utilized. Specifically, a Service Start Time field value for QoS traffic that each AP intends to transmit may be utilized as Low Latency Traffic information. It includes updated Low Latency Traffic information or a Service Start Time field value for a case changed differently from pre-negotiated Low Latency Traffic Information.

For example, TXOP sharing request information required/indicated by an AP requiring transmission of Low Latency Traffic. For example, time-bound information of Low Latency Traffic required/indicated by an AP requiring transmission of Low Latency Traffic. For example, a minimum time-bound at which transmission of Low Latency Traffic should start. For example, a maximum time-bound at which transmission of Low Latency Traffic should be successfully finished.

For example, arrival rate information of Low Latency Traffic required/indicated by an AP requiring periodic transmission of Low Latency Traffic. For example, an arrival rate of Low Latency Traffic after a last reporting event.

J. Status Code: Accept/Reject/Recommendation information for a Selection request (i.e., based on whether TXOP sharing is currently required for a DAP selected by an SAP, it may be accepted or rejected, and this may replace the above-presented TXOP sharing requirement information).
-> For example, Accept or Success (e.g., SUCCESS).
-> For example, Reject or Reject including Recommendation.

Specifically, a Reject code including a Reject reason (e.g., REJECTED_BAD_SUPPORTED_CHANNELS).

Specifically, a Reject code including a Recommendation (e.g., REJECTED_WITH_SUGGESTED_CHANGES).

Based on a value of the Status Code including Reject or Recommendation, information for a new selection request may be included. For example, a DAP receiving a selection request frame may include additional information on the above-described Operating channel and bandwidth, Required TXOP duration and Low Latency Traffic Information.

### 2.2.3 A-Control based Notify method

The above-described 2.2.2. Request/Response based Notify method may include Nominal TXOP duration information in a selection request frame based on delivering the selection request frame to select a DAP. Similarly, a notify method using an A-Control field may be performed. For example, a new type of Control Information field may be defined based on utilizing Reserved values (7 to 14) of a Control ID field within a control field.

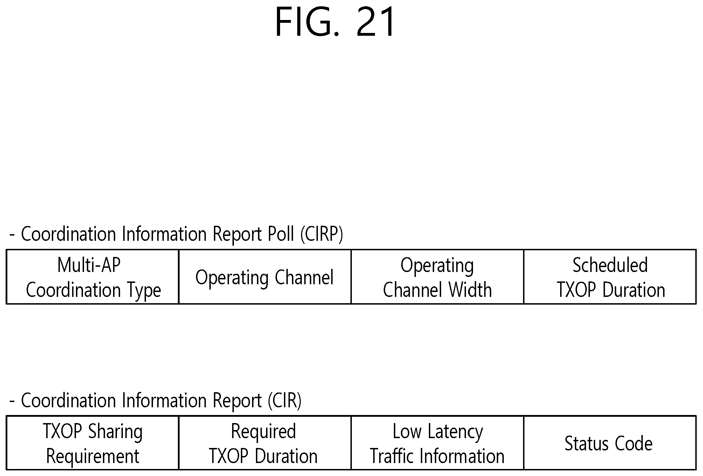

FIG. 21 illustrates an example of CIRP contents and a CIR field format for an A-Control based notify method.

Specifically, a new type of Trigger frame (e.g., Coordination Information Report Poll) for polling C-TDMA information may be defined (based on utilizing reserved values 8 to 15 of a trigger type field), and Nominal TXOP duration information may be included in the corresponding frame. Additionally or alternatively, a conventional type of Trigger frame (e.g., Basic, BSRP and MU-RTS) may be utilized. In addition, a DAP receiving this may report C-TDMA information to an SAP based on including separate report contents in a Coordination Information Report (CIR) Control field. For this, a new rule for enabling an AP to transmit a TB PPDU needs to be defined. In the above-described new type, the CIR Control field, contents based on one or a plurality of combinations of the contents defined and listed in 2.2.2. Request/Response based Notify method may be included as a field. For example, FIG. 21 illustrates an example of contents that may be included in a new or conventional type of Trigger frame transmitted from a transmitting side (i.e., SAP) and an example of a CIR Control field that may be included in a receiving side (i.e., DAP). Information (content), the number of bits of a field or designations (names) that may be included in the Trigger frame and the A-Control field presented in this example may be changed and are not limited.

### 2.2.4 MU-RTS Trigger frame/CTS frame based Notify method

Similarly to the above-described 2.2.2. Request/Response based Notify method including Nominal TXOP duration information in a request frame for selecting a DAP, a notify method using an MU-RTS TF may be performed. For example, a conventional mode (e.g., mode = 1 or 2) of an MU-RTS TXS TF may be utilized, or a new mode (e.g., mode = 3) may be defined with reserved bits.

Specifically, an MU-RTS TXS TF of a new mode for notifying a C-TDMA operation may be defined and transmitted to corresponding DAP(s) based on including a Nominal TXOP duration. For this, a new subfield for indicating a new mode may be defined, such as a Triggered TXOP Sharing Mode 1 (or 2) Support subfield in an EHT MAC Capabilities Information field. The DAP(s) may acquire information related to a C-TDMA operation and a Nominal TXOP duration value based on receiving the MU-RTS TXS TF set and indicated as the new mode, and may respond with a CTS frame (or CTS-to-Self frame). In the above-described MU-RTS TXS TF of the new mode, contents based on one or a plurality of combinations of contents that may be included in the selection request frame in 2.2.2. Request/Response based Notify method may be included in a Common Info field and a User Info field based on utilizing Reserved bits. Information (content), the number of bits of a field or designations (names) that may be included in the corresponding field may be changed and are not limited. Based on notifying a C-TDMA operation to a plurality of DAP(s) at the same time, one or more User Info fields may exist.

### 2.3 C-TDMA procedure using Two TXOPs

This section shows an example of a C-TDMA procedure operating based on Two TXOPs, and defines rules necessary for the corresponding C-TDMA procedure to be successfully performed.

### 2.3.1 C-TDMA procedure using Notification frame

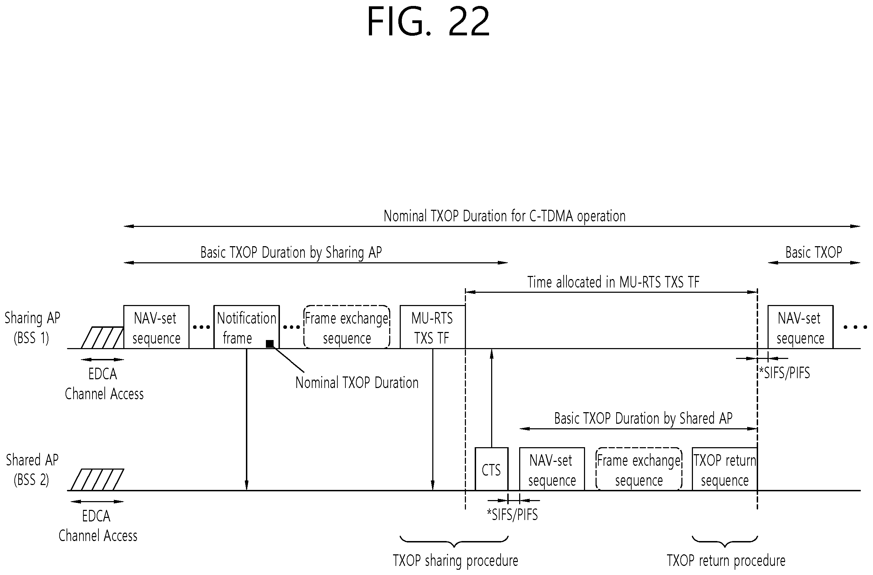

FIG. 22 illustrates an example of a Two TXOPs based C-TDMA procedure using a Notification frame.

FIG. 22 illustrates an example of a Two TXOPs based C-TDMA operation in which each coordinated AP, having acquired Nominal TXOP duration information defined in section 2.2, sequentially acquires a TXOP according to TXOP sharing of an SAP. First, APs participating in C-TDMA perform medium contention to acquire a TXOP corresponding to a Basic TXOP duration. An AP acting as an SAP by acquiring a TXOP includes, in a Duration/ID field, a time required for FE with STAs within its own BSS and a time required for a TXOP sharing procedure (Basic TXOP duration), rather than a Nominal TXOP duration meaning an overall period for a C-TDMA operation it intends to perform. For example, the SAP acquires a TXOP only for the above-described Basic TXOP duration based on a NAV-set sequence procedure and protects it with a NAV, and the SAP may perform Notification frame transmission, FE with STAs within its own BSS and a TXOP sharing procedure during this duration. Alternatively, a transmission procedure of the Notification frame may replace and include the NAV-set sequence procedure illustrated in FIG. 22.

The SAP may transmit the Nominal TXOP duration value to coordinated AP(s) during the Basic TXOP duration based on including it in the Notification frame. At this time, the coordinated AP(s) include DAP(s) scheduled to be shared with a TXOP and DAP(s) not being shared with a TXOP according to scheduling of the SAP during the Nominal TXOP duration. Therefore, DAP(s) scheduled to be shared with a TXOP from the SAP within the Nominal TXOP duration may recognize in advance whether to be shared through the corresponding Notification frame. DAP(s) selected by the SAP may wait without doing anything until a scheduled TXOP sharing timing, perform Secondary Channel Access according to capability or enter an AP Power mode. In addition, DAP(s) not scheduled to be shared with a TXOP from the SAP within the Nominal TXOP duration may recognize that the SAP is scheduled to share a TXOP with other DAP(s) through the corresponding Notification frame. AP(s) not selected by the SAP may defer access to a corresponding channel during a time allocated to the selected DAP(s) or during the entire Nominal TXOP duration announced by the SAP. Alternatively, AP(s) not selected by the SAP may perform Secondary Channel Access according to capability or enter an AP Power mode during the corresponding time. Subsequently, the SAP may perform an individual FE based on a frame exchange sequence procedure, and the SAP that has terminated the individual FE may start a TXOP sharing procedure initially scheduled based on transmitting an MU-RTS TXS TF (or Control frame).

### 2.3.2 C-TDMA procedure using Multi-AP selection procedure (Request/Response frame)

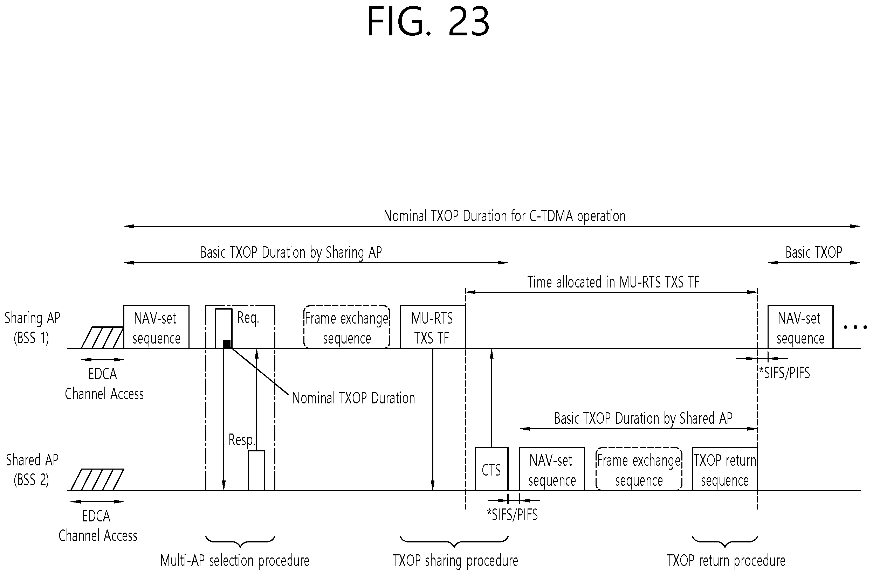

FIG. 23 illustrates example 1 of a Two TXOPs based C-TDMA procedure using a Multi-AP selection procedure.

FIG. 23 illustrates an example 1 of a C-TDMA operation for delivering Nominal TXOP duration information based on utilizing a Multi-AP selection procedure. A procedure similar to the procedure described for FIG. 22 is performed, but a difference exists in that a response frame is transmitted for reception of a frame including the Nominal TXOP duration.

An AP acting as an SAP by acquiring a TXOP includes, in a Duration/ID field, a time required for FE with STAs within its own BSS and a time required for a TXOP sharing procedure (Basic TXOP duration), rather than a Nominal TXOP duration meaning an overall period for a C-TDMA operation it intends to perform. For example, the SAP acquires a TXOP only for the above-described Basic TXOP duration based on a NAV-set sequence procedure and protects it with a NAV, and the SAP may perform FE with STAs within its own BSS and a TXOP sharing procedure during this duration. Alternatively, the Multi-AP selection procedure may replace and include the NAV-set sequence procedure illustrated in FIG. 23.

The SAP may transmit the Nominal TXOP duration value to coordinated AP(s) during the Basic TXOP duration based on including it in a frame (e.g., Control frame, Management frame, Trigger frame, Data frame etc.) delivered in the Multi-AP selection procedure. Alternatively, Multi-AP selection and transmission of the Nominal TXOP duration value may be performed based on utilizing a single sequence (or a single procedure) by integrating the NAV-set sequence and the Multi-AP selection procedure illustrated in FIG. 23. Through the Multi-AP selection procedure including such a NAV-set sequence procedure, a hidden node issue when STA(s) connected to or adjacent to the DAP are in a hidden node relationship with the SAP may be prevented. Specifically, the SAP transmits a selection request frame including Nominal TXOP duration information and the information described above in section 2.2, and the DAP responds with a response frame (e.g., CTS frame) thereto, so that it may be protected from surrounding STA(s).

At this time, the coordinated AP(s) include DAP(s) scheduled to be shared with a TXOP and DAP(s) not being shared with a TXOP according to scheduling of the SAP during the Nominal TXOP duration. Therefore, DAP(s) scheduled to be shared with a TXOP from the SAP within the Nominal TXOP duration may recognize in advance whether to be shared through notified Nominal TXOP duration information, and the corresponding DAP(s) transmit a response frame (e.g., response frame, CTS frame etc.) for the frame delivered from the SAP. At this time, a method of setting a Duration field value of the request frame transmitted by the SAP to 0 may be applied. DAP(s) selected by the SAP may wait without doing anything until a scheduled TXOP sharing timing, perform Secondary Channel Access according to capability or enter an AP Power mode.

In addition, DAP(s) not scheduled to be shared with a TXOP from the SAP within the Nominal TXOP duration may recognize that the SAP is scheduled to share a TXOP with other DAP(s) through the notified Nominal TXOP duration information. AP(s) not selected by the SAP may defer access to a corresponding channel during a time allocated to the selected DAP(s) or during the entire Nominal TXOP duration announced by the SAP. Alternatively, AP(s) not selected by the SAP may perform Secondary Channel Access according to capability or enter an AP Power mode during the corresponding time. Subsequently, the SAP may perform an individual FE based on a frame exchange sequence procedure, and the SAP that has terminated the individual FE may start a TXOP sharing procedure initially scheduled based on transmitting an MU-RTS TXS TF (or Control frame).

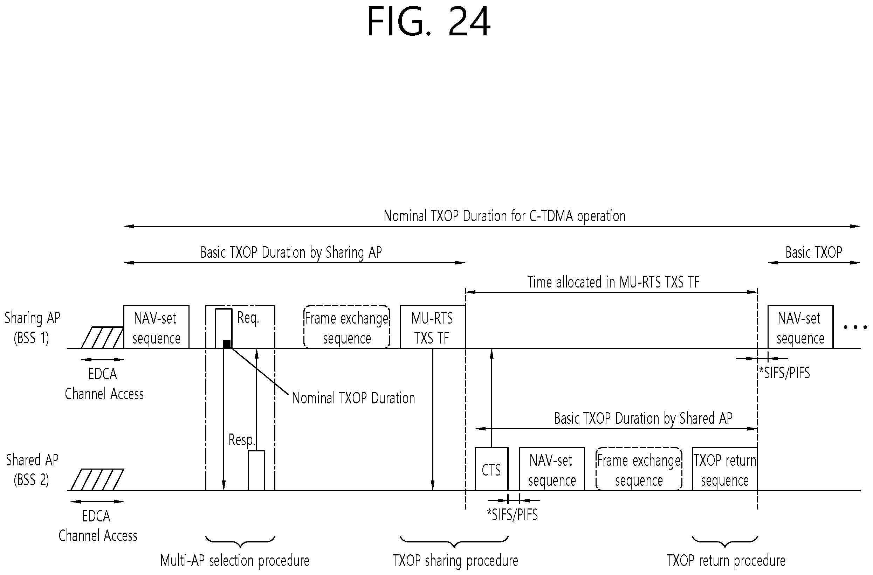

FIG. 24 illustrates example 2 of a Two TXOPs based C-TDMA procedure using a Multi-AP selection procedure.

FIG. 24 illustrates an example 2 of a C-TDMA operation for delivering Nominal TXOP duration information based on utilizing a Multi-AP selection procedure. A procedure similar to that in FIG. 23 is performed, but a difference exists in that an initial TXOP duration of an SAP is terminated with transmission of an MU-RTS TXS TF. For example, it may be considered that a TXOP of a DAP starts with transmission of a CTS frame. At this time, the CTS frame may be replaced with a CTS-to-Self frame, and a subsequent NAV-set sequence procedure may be omitted based on transmitting the CTS-to-Self frame (for example, transmission of the CTS-to-Self frame may replace the NAV-set sequence). Detailed operations for the example 2 presented through FIG. 24 are the same as those of the example 1 of FIG. 23.

### <Definition of rules for solving protection issues in Two TXOPs based operations>

The present disclosure defines Rule 1) to perform a smooth C-TDMA operation between coordinatedAPs during a Nominal TXOP duration indicated by an SAP, and DAP(s) scheduled to be shared with a TXOP based on acquiring the corresponding information by receiving a frame including Nominal TXOP duration information may follow Rule 1) below.

Rule 1): A DAP notified of a Nominal TXOP duration through a frame delivered from an SAP may perform a NAV-set sequence procedure or an individual FE immediately after SIFS/PIFS based on responding with a CTS frame (or a response frame corresponding to the frame delivered from the SAP) after receiving an MU-RTS TXS TF (i.e., a frame transmitted for the purpose of sharing a TXOP in a TXOP sharing procedure) delivered from the SAP. Alternatively, the DAP may perform an integrated response to the MU-RTS TXS TF reception and a NAV-set sequence procedure based on using a CTS-to-Self frame after receiving the MU-RTS TXS TF delivered from the SAP. At this time, a start timing of an allocated time assigned from the SAP may be assumed to be immediately after receiving the MU-RTS TXS TF, same as a conventional EHT TXS protocol.

The initial Basic TXOP duration of the SAP presented in the examples of FIG. 22 to FIG. 24 includes an entirety (e.g., FIG. 22 and FIG. 23) or a part (i.e., FIG. 24) of the TXOP sharing procedure. For STA(s) connected to a DAP that has set a basic NAV for an SAP within the Basic TXOP duration period of the SAP, a basic NAV timer value for the SAP becomes 0 (expires) with termination of the TXOP duration of the SAP. Through this, a protection issue due to basic NAV setting from the SAP or an STA connected to the SAP that may occur to the STA(s) connected to the DAP may be prevented. Through Rule 1) defined above, the DAP may acquire a TXOP immediately after SIFS/PIFS, and the STA connected to the DAP may set an Intra-BSS NAV and transmit a UL TB PPDU to the DAP.

A DAP following Rule 1) defined above may acquire a TXOP based on performing a NAV-set sequence procedure at SIFS/PIFS intervals following the TXOP sharing procedure of the SAP. Alternatively, it may acquire a TXOP immediately based on using a CTS-to-Self frame. At this time, the Basic TXOP duration of the DAP may be limited by Rule 2) below.

Rule 2): A value of a Duration/ID field in a frame transmitted by a DAP during a time allocated from an SAP (Time allocated in MU-RTS TXS TF) cannot exceed a value of an Allocation Duration field included in an MU-RTS TXS TF delivered from the SAP + a PPDU length of the MU-RTS TXS TF + a time required to deliver a response frame for the reception of the MU-RTS TXS TF (SIFS/PIFS and a PPDU length of the response frame).

At this time, coordinated APs not being shared with a TXOP within the Nominal TXOP duration notified from the SAP may defer channel access during a time allocated to another DAP or perform a backoff for primary or secondary channel access for a time shorter than the allocated time.

A DAP following Rule 2) defined above may perform an individual FE with STAs within its own BSS during the allocated time, and the DAP that has terminated the individual FE may decide whether to perform a TXOP return procedure based on Option 1) always performing a TXOP return procedure for returning a TXOP to the SAP, Option 2) performing a TXOP return procedure only when sufficient time for TXOP return remains within the allocated time or Option 3) information negotiated in a pre-negotiation process or indicated from the SAP.

Therefore, based on the DAP performing the TXOP return procedure by the options for the TXOP return procedure described above, the SAP may follow Rule 3) below within the initially set Nominal TXOP duration.

Rule 3): An SAP, having received a frame delivered from a DAP (i.e., a frame transmitted for the purpose of returning a TXOP in a TXOP return procedure) within an initially set Nominal TXOP duration, may perform a NAV-set sequence procedure or an individual FE immediately after SIFS/PIFS based on responding with a response frame corresponding to the frame delivered from the DAP. Alternatively, the SAP may integrate a response to MU-RTS TXS TF reception and a NAV-set sequence procedure based on using a CTS-to-Self frame after receiving an MU-RTS TXS TF (for a TXOP return procedure) delivered from the DAP. Alternatively, the SAP may perform a NAV-set sequence procedure or an individual FE immediately after SIFS/PIFS without transmitting a separate response frame based on receiving a frame for the purpose of TXOP return (e.g., CF-End frame) delivered from the DAP.

Therefore, an SAP following Rule 3) defined above may acquire a TXOP again based on performing a NAV-set sequence procedure at SIFS/PIFS intervals following the TXOP return procedure of the DAP. Alternatively, it may acquire a TXOP immediately based on using a CTS-to-Self frame. At this time, the Basic TXOP duration of the SAP may be limited by Rule 4) below.

Rule 4): The Basic TXOP duration of the SAP following the TXOP return procedure of the DAP cannot exceed the Nominal TXOP duration initially set by the SAP. For example, a sum of an overall period for C-TDMA operations performed so far (e.g., initial Basic TXOP duration of the SAP + 2×SIFS/PIFS + Basic TXOP duration of the DAP) and a subsequent Basic TXOP duration cannot exceed the Nominal TXOP duration.

An SAP following Rule 4) defined and described above may perform an additional FE with STAs within its own BSS during a residual Nominal TXOP duration or perform a separate initially scheduled TXOP sharing procedure (TXOP sharing in C-TDMA or TXOP sharing in EHT).

### 2.4 Support for Multiple DAPs in C-TDMA procedure using Two TXOPs

This section presents a method and a procedure for performing TXOP sharing to a plurality of DAPs in a C-TDMA procedure operating based on Two TXOPs.

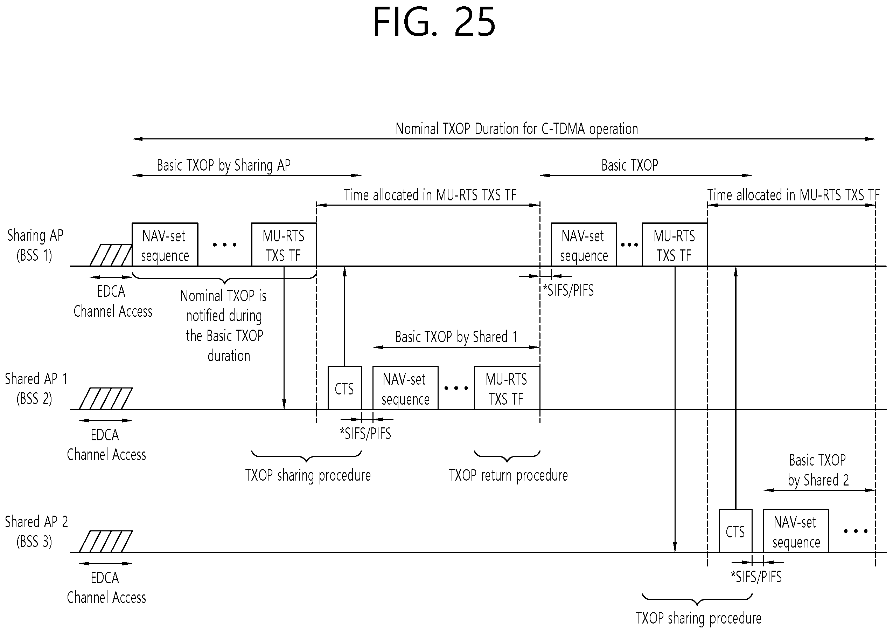

FIG. 25 illustrates example 1 of Multiple DAPs support in a Two TXOPs based C-TDMA procedure.

FIG. 25 illustrates an example of performing TXOP sharing to a plurality of DAPs in a C-TDMA procedure based on utilizing Two TXOPs. It proceeds in the same manner as the TXOP sharing procedure for a single DAP described above in section 2.3, and each AP follows the Rules defined in section 2.3. The TXOP sharing procedure for a subsequent DAP proceeds based on a sequentially method. For example, an SAP sequentially performs a TXOP sharing procedure to several DAPs based on a process of pre-scheduling or delivering an individual MU-RTS TXS TF and receiving a response thereto to the DAPs with which a TXOP is to be shared.

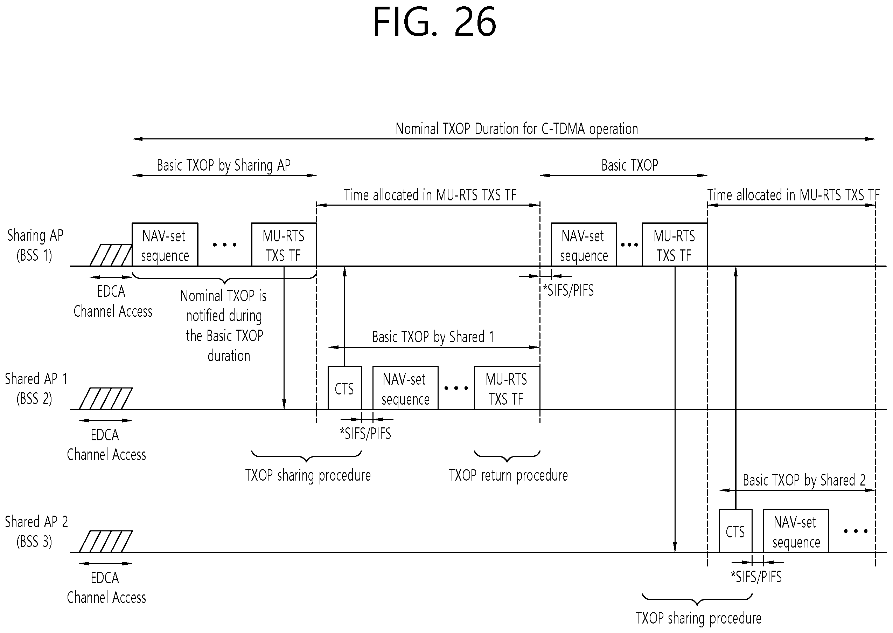

FIG. 26 illustrates example 2 of Multiple DAPs support in a Two TXOPs based C-TDMA procedure.

Similarly, in example 2 of FIG. 26, a procedure similar to that in FIG. 25 is performed, but a difference exists in that a TXOP duration of an SAP is terminated with transmission of an MU-RTS TXS TF. For example, it may be considered that a TXOP of DAP(s) starts with transmission of a CTS frame. At this time, the CTS frame may be replaced with a CTS-to-Self frame, and a subsequent NAV-set sequence procedure may be omitted based on transmitting the CTS-to-Self frame (for example, transmission of the CTS-to-Self frame may replace the NAV-set sequence). Detailed operations for the example 2 presented through FIG. 26 are the same as those of the example 1 of FIG. 25.

The present specification proposes a method in which TXOP sharing and TXOP return for acquiring a TXOP are performed when APs operate in C-TDMA in a Multi-AP environment, and specifically, defines a Nominal TXOP duration which is a new TXOP duration and several Rules that coordinated APs should follow within the corresponding duration. The proposed C-TDMA operation using two TXOPs has an advantage of solving a basic NAV issue that may occur to non-AP STAs connected to a DAP due to the TXOP sharing and TXOP return methods for acquiring a TXOP.

Specifically, the SAP transmits a selection request frame for a Multi-AP selection procedure and the DAP responds with a response frame (e.g., CTS frame) thereto, so that a hidden node problem may be prevented. In addition, for STA(s) connected to the DAP that has set a basic NAV for the SAP within a Basic TXOP duration period of the SAP, a protection issue does not occur because a basic NAV timer value for the SAP expires with termination of the TXOP duration of the SAP in a TXOP sharing procedure, and a UL TB PPDU may be transmitted to the DAP during an allocated time.

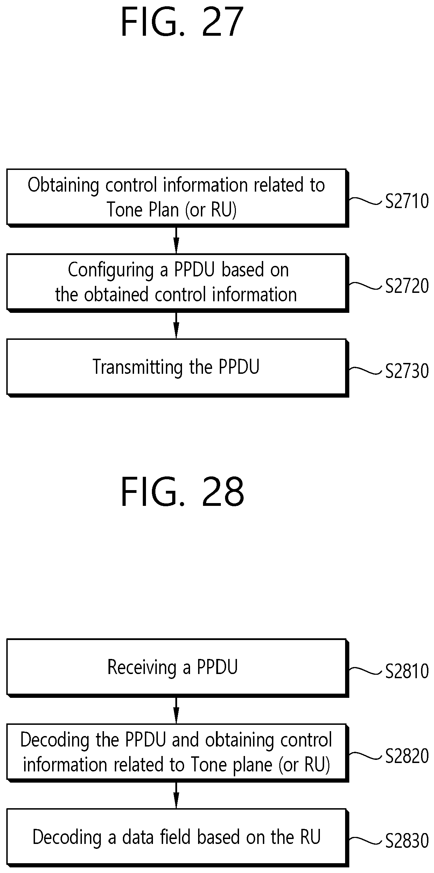

FIG. 27 is a flowchart illustrating the operation of a transmitting device according to the present embodiment.

The example of FIG. 27 may be performed by a transmitting device (AP and/or non-AP STA).

Some of each step (or detailed sub-step to be described later) of the example of FIG. 27 may be skipped/omitted.

Through step S2710, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2720, the transmitting device may construct/generate a PPDU based on the acquired control information. Configuring/generating the PPDU may include configuring/generating each field of the PPDU. That is, step S2720 includes configuring the EHT-SIG field including control information about the tone plan. That is, step S2720 includes configuring a field including control information (e.g., N bitmap) indicating the size/position of the RU; and/or configuring a field including an identifier of an STA receiving the RU (e.g., AID).

Also, step S2720 may include generating an STF/LTF sequence transmitted through a specific RU. The STF/LTF sequence may be generated based on a preset STF generation sequence/LTF generation sequence.

Also, step S2720 may include generating a data field (i.e., MPDU) transmitted through a specific RU.

The transmitting device may transmit the PPDU constructed through step S2720 to the receiving device based on step S2730.

While performing step S2730, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 28 is a flowchart illustrating the operation of a receiving device according to the present embodiment.

The aforementioned PPDU may be received according to the example of FIG. 28.

The example of FIG. 28 may be performed by a receiving apparatus/device (AP and/or non-AP STA).

Some of each step (or detailed sub-step to be described later) of the example of FIG. 28 may be skipped/omitted.

The receiving device (receiving STA) may receive all or part of the PPDU through step S2810. The received signal may be in the form of FIG. 5.

A sub-step of step S2810 may be determined based on step S2730 of FIG. 27. That is, in step S2810, an operation of restoring the result of the CSD, Spatial Mapping, IDFT/IFFT operation, and GI insertion operation applied in step S2730 may be performed.

In step S2820, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2830, the receiving device may decode the remaining part of the PPDU based on information about the tone plan (i.e., RU) acquired through step S2820. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2830 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 28.

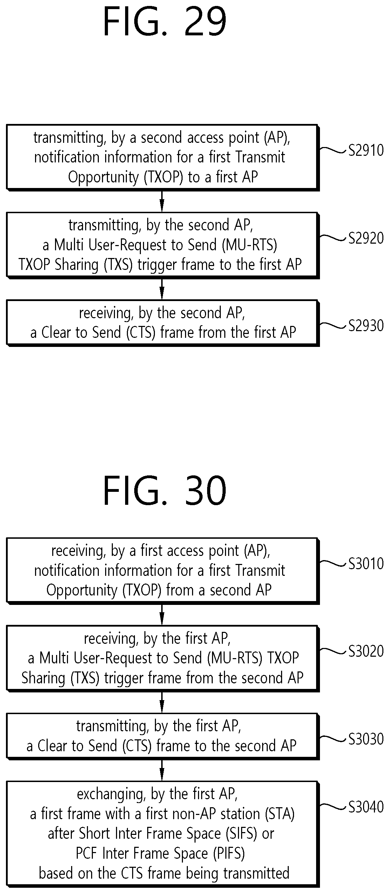

FIG. 29 is a flowchart illustrating a procedure of a method for performing a C-TDMA operation during a Nominal TXOP duration in terms of a Sharing AP according to the present embodiment.

The example of FIG. 29 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.1 The system.

An example of FIG. 29 may be performed in a second AP, the second AP may be set as a sharing AP (SAP) after negotiation in multi-AP communication, and the first AP may be set as a shared AP (DAP) after negotiation in multi-AP communication. First and second non-AP STAs of the present embodiment may correspond to at least one station (STA).

This embodiment proposes a method for performing TXOP sharing by setting a Nominal TXOP duration when performing a C-TDMA operation in communication between multiple Access Points (APs) (or a Multi-AP operation). In particular, the present embodiment proposes a method in which a Basic TXOP and a Nominal TXOP are distinguished based on information on a Nominal TXOP duration, and a non-AP STA within a BSS of a DAP performs a frame exchange with the DAP without being affected by a NAV of an SAP. In addition, the present embodiment proposes a method for utilizing a remaining TXOP by switching a TXOP holder from the DAP back to the SAP based on a TXOP return sequence.

In step S2910, a second access point (AP) transmits notification information for a first Transmit Opportunity (TXOP) to a first AP.

In step S2920, the second AP transmits a Multi User-Request to Send (MU-RTS) TXOP Sharing (TXS) trigger frame to the first AP.

In step S2930, the second AP receives a Clear to Send (CTS) frame from the first AP.

After a Short Inter Frame Space (SIFS) or a PCF (Point Coordination Function) IFS (PIFS) based on transmission of the CTS frame, a first frame is exchanged between the first AP and a first non-AP Station (STA).

At this time, the second AP is a Sharing AP that controls coordination between a plurality of APs, and the first AP is a Shared AP that receives resource allocation or sharing from the Sharing AP. The first non-AP STA is a non-AP STA within a Basic Service Set (BSS) of the first AP.

The first TXOP is an entire duration including all TXOPs in which the first and second APs participating in the coordination between the plurality of APs individually perform frame exchange. The first TXOP may be defined as a nominal TXOP scheduled by the Sharing AP for the C-TDMA operation.

The scheme for the coordination between the plurality of APs may include coordinated Multi-AP schemes such as Coordinated-Time Division Multiplexing Access (C-TDMA), Coordinated-Spatial Reuse (C-SR), Coordinated-Beamforming (C-BF) or Coordinated-Orthogonal Frequency Division Multiple Access (C-OFDMA).

In an example of the C-TDMA operation, an entity sharing a TXOP (SAP, here the second AP) and an entity with which the TXOP is shared (DAP, here the first AP) are APs having different BSSs. That is, since non-AP STAs within the BSS of the DAP may set a basic NAV based on frame transmission within the BSS of the SAP and may not be able to smoothly perform frame exchange with the DAP, a protection rule related to Network Allocation Vector (NAV) setting should be sophisticatedly applied for smooth coordination between APs and frame exchange within each BSS. In particular, non-AP STAs connected to the DAP may receive or sense a frame transmitted from the SAP or non-AP STAs connected to the SAP and a CTS frame transmitted from the DAP, and may set a basic NAV for the SAP. At this time, a problem may occur in which non-AP STAs connected to the DAP may not transmit an Uplink Physical Layer Convergence Procedure Protocol Data Unit (UL PPDU) or a frame to the DAP due to the basic NAV.

The present embodiment proposes a TXOP sharing method for performing a C-TDMA procedure by distinguishing a Basic TXOP and a Nominal TXOP based on information on a Nominal TXOP duration. In particular, the present embodiment proposes a C-TDMA operation in which a TXOP holder is switched from the SAP to the DAP or from the DAP back to the SAP, and during the C-TDMA operation, the DAP and some non-AP STAs within the BSS of the DAP may perform frame exchange with the DAP without being affected by the NAV of the SAP. For example, based on receiving a trigger frame to which a resource (Resource Unit (RU)) for enabling transmission of a PPDU or a frame from the DAP is allocated, associated non-AP STAs of the DAP may transmit the PPDU or the frame without the influence of the NAV.

Based on terminating some TXOPs and switching a TXOP holder according to the protected C-TDMA based TXOP sharing method, the present embodiment has an effect that non-AP STAs connected to the DAP may smoothly perform frame exchange with the DAP without setting a basic NAV by the SAP. Accordingly, appropriate scheduling according to coordination between a plurality of APs may be performed, and an increase in overall network throughput may be expected.

Hereinafter, the present embodiment specifically describes a TXOP sharing method for switching a TXOP holder based on utilizing two types of TXOPs through information on a Nominal TXOP duration.

The first AP may transmit response information for the notification information for the first TXOP to the second AP.

The notification information for the first TXOP may include at least one of an identifier of a group for the coordination between the plurality of APs, an identifier of the Shared AP, a capability of the Sharing AP, information on a TXS operation of the Sharing AP, information on a scheme for coordination between the plurality of APs, address information of the Shared AP, channel information in which the plurality of APs operate, bandwidth information in which the plurality of APs operate, information on a duration of the first TXOP, information on a timing of TXS by the Sharing AP and information on low-latency traffic transmitted and received by each of the plurality of APs.

The response information may include at least one of an identifier of a group for the coordination between the plurality of APs, an identifier of the Shared AP, address information of the Shared AP, channel information in which the plurality of APs operate, bandwidth information in which the plurality of APs operate, information on a duration of a TXOP that the Shared AP wishes to be shared, buffer status information of the Shared AP, information on whether TXS by the Sharing AP is necessary, information on low-latency traffic transmitted and received by each of the plurality of APs and a status code.

A second TXOP may be switched to a third TXOP based on a timing of transmission of the MU-RTS TXS trigger frame or the CTS frame. The second TXOP may be a TXOP acquired by the second AP, and the third TXOP may be a TXOP acquired by the first AP. The notification information for the first TXOP is transmitted during the second TXOP, and the first frame may be exchanged during the third TXOP.

The first AP may acquire the third TXOP after the SIFS or the PIFS based on the second TXOP being terminated, based on the notification information for the first TXOP.

A basic Network Allocation Vector (NAV) for the second AP may be set in the first non-AP STA based on the MU-RTS TXS trigger frame. At this time, a timer value of the basic NAV for the second AP may be ignored with termination of the second TXOP based on the notification information for the first TXOP (Rule 1). Through this, a protection issue due to the basic NAV for the second AP may be prevented for the first non-AP STA.

In addition, an Intra-Basic Service Set (BSS) NAV may be set in the first non-AP STA based on the first frame. Based on the first frame being a trigger frame, the first non-AP STA may transmit a UL Trigger Based (TB) PPDU triggered by the trigger frame to the first AP during the third TXOP.

A value of a Duration or Identifier (ID) field of the first frame may not exceed a sum of a value of an Allocation Duration subfield of a User Info field of the MU-RTS TXS trigger frame, a length of a PPDU of the MU-RTS TXS trigger frame and a time required to transmit the CTS frame (Rule 2). A termination timing of the third TXOP may be determined based on the value of the Duration or ID field of the first frame.

Furthermore, the present embodiment describes a procedure for returning a TXOP holder of the DAP back to the SAP.

In addition, the first AP may transmit a frame for TXOP return to the second AP after exchange of the first frame and/or additional frame exchange is completed. Based on the notification information for the first TXOP, the second AP may transmit a second frame to a second non-AP STA after SIFS or PIFS based on receiving the frame for the TXOP return (Rule 3). The third TXOP may be terminated at a timing when the frame for the TXOP return is transmitted. A timing when the third TXOP is terminated may be determined based on the value of the Allocation Duration subfield of the User Info field of the MU-RTS TXS trigger frame. At this time, the second non-AP STA may be a non-AP STA within a BSS of the second AP.

The third TXOP may be switched to a fourth TXOP based on a timing of transmission of the second frame. The fourth TXOP is a remaining TXOP acquired again by the second AP and may not exceed the duration of the first TXOP (Rule 4). This is because the first TXOP corresponds to an entire TXOP for coordination between the plurality of APs.

FIG. 30 is a flowchart illustrating a procedure of a method for performing a C-TDMA operation during a Nominal TXOP duration in terms of a Shared AP according to the present embodiment.

The example of FIG. 30 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.1 The system.

An example of FIG. 30 may be performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

This embodiment proposes a method for performing TXOP sharing by setting a Nominal TXOP duration when performing a C-TDMA operation in communication between multiple Access Points (APs) (or a Multi-AP operation). In particular, the present embodiment proposes a method in which a Basic TXOP and a Nominal TXOP are distinguished based on information on a Nominal TXOP duration, and a non-AP STA within a BSS of a DAP performs a frame exchange with the DAP without being affected by a NAV of an SAP. In addition, the present embodiment proposes a method for utilizing a remaining TXOP by switching a TXOP holder from the DAP back to the SAP based on a TXOP return sequence.

In step S3010, a first access point (AP) receives notification information for a first Transmit Opportunity (TXOP) from a second AP.

In step S3020, the first AP receives a Multi User-Request to Send (MU-RTS) TXOP Sharing (TXS) trigger frame from the second AP.

In step S3030, the first AP transmits a Clear to Send (CTS) frame to the second AP.

In step S3040, the first AP exchanges a first frame with a first non-AP Station (STA) after Short Inter Frame Space (SIFS) or PCF Inter Frame Space (PIFS) based on the CTS frame being transmitted.

At this time, the second AP is a Sharing AP that controls coordination between a plurality of APs, and the first AP is a Shared AP that receives resource allocation or sharing from the Sharing AP. The first non-AP STA is a non-AP STA within a Basic Service Set (BSS) of the first AP.

The first TXOP is an entire duration including all TXOPs in which the first and second APs participating in the coordination between the plurality of APs individually perform frame exchange. The first TXOP may be defined as a nominal TXOP scheduled by the Sharing AP for the C-TDMA operation.

The scheme for the coordination between the plurality of APs may include coordinated Multi-AP schemes such as Coordinated-Time Division Multiplexing Access (C-TDMA), Coordinated-Spatial Reuse (C-SR), Coordinated-Beamforming (C-BF) or Coordinated-Orthogonal Frequency Division Multiple Access (C-OFDMA).

In an example of the C-TDMA operation, an entity sharing a TXOP (SAP, here the second AP) and an entity with which the TXOP is shared (DAP, here the first AP) are APs having different BSSs. That is, since non-AP STAs within the BSS of the DAP may set a basic NAV based on frame transmission within the BSS of the SAP and may not be able to smoothly perform frame exchange with the DAP, a protection rule related to Network Allocation Vector (NAV) setting should be sophisticatedly applied for smooth coordination between APs and frame exchange within each BSS. In particular, non-AP STAs connected to the DAP may receive or sense a frame transmitted from the SAP or non-AP STAs connected to the SAP and a CTS frame transmitted from the DAP, and may set a basic NAV for the SAP. At this time, a problem may occur in which non-AP STAs connected to the DAP may not transmit an Uplink Physical Layer Convergence Procedure Protocol Data Unit (UL PPDU) or a frame to the DAP due to the basic NAV.

The present embodiment proposes a TXOP sharing method for performing a C-TDMA procedure by distinguishing a Basic TXOP and a Nominal TXOP based on information on a Nominal TXOP duration. In particular, the present embodiment proposes a C-TDMA operation in which a TXOP holder is switched from the SAP to the DAP or from the DAP back to the SAP, and during the C-TDMA operation, the DAP and some non-AP STAs within the BSS of the DAP may perform frame exchange with the DAP without being affected by the NAV of the SAP. For example, based on receiving a trigger frame to which a resource (Resource Unit (RU)) for enabling transmission of a PPDU or a frame from the DAP is allocated, associated non-AP STAs of the DAP may transmit the PPDU or the frame without the influence of the NAV.

Based on terminating some TXOPs and switching a TXOP holder according to the protected C-TDMA based TXOP sharing method, the present embodiment has an effect that non-AP STAs connected to the DAP may smoothly perform frame exchange with the DAP without setting a basic NAV by the SAP. Accordingly, appropriate scheduling according to coordination between a plurality of APs may be performed, and an increase in overall network throughput may be expected.

Hereinafter, the present embodiment specifically describes a TXOP sharing method for switching a TXOP holder based on utilizing two types of TXOPs through information on a Nominal TXOP duration.

The first AP may transmit response information for the notification information for the first TXOP to the second AP.

The notification information for the first TXOP may include at least one of an identifier of a group for the coordination between the plurality of APs, an identifier of the Shared AP, a capability of the Sharing AP, information on a TXS operation of the Sharing AP, information on a scheme for coordination between the plurality of APs, address information of the Shared AP, channel information in which the plurality of APs operate, bandwidth information in which the plurality of APs operate, information on a duration of the first TXOP, information on a timing of TXS by the Sharing AP and information on low-latency traffic transmitted and received by each of the plurality of APs.

The response information may include at least one of an identifier of a group for the coordination between the plurality of APs, an identifier of the Shared AP, address information of the Shared AP, channel information in which the plurality of APs operate, bandwidth information in which the plurality of APs operate, information on a duration of a TXOP that the Shared AP wishes to be shared, buffer status information of the Shared AP, information on whether TXS by the Sharing AP is necessary, information on low-latency traffic transmitted and received by each of the plurality of APs and a status code.

A second TXOP may be switched to a third TXOP based on a timing of transmission of the MU-RTS TXS trigger frame or the CTS frame. The second TXOP may be a TXOP acquired by the second AP, and the third TXOP may be a TXOP acquired by the first AP. The notification information for the first TXOP is transmitted during the second TXOP, and the first frame may be exchanged during the third TXOP.

The first AP may acquire the third TXOP after the SIFS or the PIFS based on the second TXOP being terminated, based on the notification information for the first TXOP.

A basic Network Allocation Vector (NAV) for the second AP may be set in the first non-AP STA based on the MU-RTS TXS trigger frame. At this time, a timer value of the basic NAV for the second AP may be ignored with termination of the second TXOP based on the notification information for the first TXOP (Rule 1). Through this, a protection issue due to the basic NAV for the second AP may be prevented for the first non-AP STA.

In addition, an Intra-Basic Service Set (BSS) NAV may be set in the first non-AP STA based on the first frame. Based on the first frame being a trigger frame, the first non-AP STA may transmit a UL Trigger Based (TB) PPDU triggered by the trigger frame to the first AP during the third TXOP.

A value of a Duration or Identifier (ID) field of the first frame may not exceed a sum of a value of an Allocation Duration subfield of a User Info field of the MU-RTS TXS trigger frame, a length of a PPDU of the MU-RTS TXS trigger frame and a time required to transmit the CTS frame (Rule 2). A termination timing of the third TXOP may be determined based on the value of the Duration or ID field of the first frame.

Furthermore, the present embodiment describes a procedure for returning a TXOP holder of the DAP back to the SAP.

In addition, the first AP may transmit a frame for TXOP return to the second AP after exchange of the first frame and/or additional frame exchange is completed. Based on the notification information for the first TXOP, the second AP may transmit a second frame to a second non-AP STA after SIFS or PIFS based on receiving the frame for the TXOP return (Rule 3). The third TXOP may be terminated at a timing when the frame for the TXOP return is transmitted. A timing when the third TXOP is terminated may be determined based on the value of the Allocation Duration subfield of the User Info field of the MU-RTS TXS trigger frame. At this time, the second non-AP STA may be a non-AP STA within a BSS of the second AP.

The third TXOP may be switched to a fourth TXOP based on a timing of transmission of the second frame. The fourth TXOP is a remaining TXOP acquired again by the second AP and may not exceed the duration of the first TXOP (Rule 4). This is because the first TXOP corresponds to an entire TXOP for coordination between the plurality of APs.

### < Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure receives notification information for a first Transmit Opportunity (TXOP) from a second access point (AP); receives a Multi User-Request to Send (MU-RTS) TXOP Sharing (TXS) trigger frame from the second AP; transmits a Clear to Send (CTS) frame to the second AP; and exchanges a first frame with a first non-AP Station (STA) after Short Inter Frame Space (SIFS) or PCF Inter Frame Space (PIFS) based on the CTS frame being transmitted.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving notification information for a first Transmit Opportunity (TXOP) from a second access point (AP); receiving a Multi User-Request to Send (MU-RTS) TXS trigger frame from the second AP; transmitting a Clear to Send (CTS) frame to the second AP; and exchanging a first frame with a first non-AP Station (STA) after Short Inter Frame Space (SIFS) or PCF Inter Frame Space (PIFS) based on the CTS frame being transmitted. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a first access point (AP), notification information for a first Transmit Opportunity (TXOP) from a second AP;
receiving, by the first AP, a Multi User-Request to Send (MU-RTS) TXOP Sharing (TXS) trigger frame from the second AP;
transmitting, by the first AP, a Clear to Send (CTS) frame to the second AP; and
exchanging, by the first AP, a first frame with a first non-AP station (STA) after Short Inter Frame Space (SIFS) or PCF Inter Frame Space (PIFS) based on the CTS frame being transmitted,
wherein the second AP is a Sharing AP that controls coordination between multiple APs,
wherein the first AP is a Shared AP that receives resources allocated or shared from the Sharing AP,
wherein the first non-AP STA is a non-AP STA within a Basic Service Set (BSS) of the first AP, and
wherein the first TXOP is an entire duration including all TXOPs in which the first and second APs participating in the coordination between the plurality of APs individually perform frame exchange.

2. The method of claim 1, further comprising: transmitting, by the first AP, response information for the notification information for the first TXOP to the second AP,
wherein the notification information for the first TXOP includes at least one of an identifier of a group for the coordination between the plurality of APs, an identifier of the Shared AP, a capability of the Sharing AP, information on a TXS operation of the Sharing AP, information on a scheme for coordination between the plurality of APs, address information of the Shared AP, channel information in which the plurality of APs operate, bandwidth information in which the plurality of APs operate, information on a duration of the first TXOP, information on a timing of TXS by the Sharing AP and information on low-latency traffic transmitted and received by each of the plurality of APs, and
wherein the response information includes at least one of an identifier of a group for the coordination between the plurality of APs, an identifier of the Shared AP, address information of the Shared AP, channel information in which the plurality of APs operate, bandwidth information in which the plurality of APs operate, information on a duration of a TXOP that the Shared AP wishes to be shared, buffer status information of the Shared AP, information on whether TXS by the Sharing AP is necessary, information on low-latency traffic transmitted and received by each of the plurality of APs and a status code.

3. The method of claim 1, wherein a second TXOP is switched to a third TXOP based on a timing of transmission of the MU-RTS TXS trigger frame or the CTS frame,
wherein the second TXOP is a TXOP acquired by the second AP, and the third TXOP is a TXOP acquired by the first AP, and
wherein the notification information for the first TXOP is transmitted during the second TXOP, and the first frame is exchanged during the third TXOP.

4. The method of claim 3, further comprising: acquiring, by the first AP, the third TXOP after the SIFS or the PIFS based on the second TXOP being terminated, based on the notification information for the first TXOP,
wherein a basic Network Allocation Vector (NAV) for the second AP is set in the first non-AP STA based on the MU-RTS TXS trigger frame,
wherein a timer value of the basic NAV for the second AP is ignored with termination of the second TXOP based on the notification information for the first TXOP, and
wherein an Intra-Basic Service Set (BSS) NAV is set in the first non-AP STA based on the first frame.

5. The method of claim 4, wherein a value of a Duration or Identifier (ID) field of the first frame does not exceed a sum of a value of an Allocation Duration subfield of a User Info field of the MU-RTS TXS trigger frame, a length of a PPDU of the MU-RTX TXS trigger frame and a time required to transmit the CTS frame.

6. The method of claim 5, further comprising: transmitting, by the first AP, a frame for TXOP return to the second AP after exchange of the first frame is completed,
wherein, based on the notification information for the first TXOP, the second AP transmits a second frame to a second non-AP STA after SIFS or PIFS based on receiving the frame for the TXOP return,
wherein the third TXOP is terminated at a timing when the frame for the TXOP return is transmitted,
wherein a timing when the third TXOP is terminated is determined based on the value of the Allocation Duration subfield of the User Info field of the MU-RTS TXS trigger frame, and
wherein the second non-AP STA is a non-AP STA within a BSS of the second AP.

7. The method of claim 6, wherein the third TXOP is switched to a fourth TXOP based on a timing of transmission of the second frame, and
wherein the fourth TXOP is a remaining TXOP acquired again by the second AP and does not exceed the duration of the first TXOP.

8. A first access point (AP) in a wireless local area network (WLAN) system, the first AP comprising:
a memory;
a transceiver; and
a processor being operatively connected to the memory and the transceiver,
wherein the processor is configured to:
receive notification information for a first Transmit Opportunity (TXOP) from a second AP;
receive a Multi User-Request to Send (MU-RTS) TXOP Sharing (TXS) trigger frame from the second AP;
transmit a Clear to Send (CTS) frame to the second AP; and
exchange a first frame with a first non-AP station (STA) after Short Inter Frame Space (SIFS) or PCF Inter Frame Space (PIFS) based on the CTS frame being transmitted,
wherein the second AP is a Sharing AP that controls coordination between multiple APs,
wherein the first AP is a Shared AP that receives resources allocated or shared from the Sharing AP,
wherein the first non-AP STA is a non-AP STA within a Basic Service Set (BSS) of the first AP, and
wherein the first TXOP is an entire duration including all TXOPs in which the first and second APs participating in the coordination between the plurality of APs individually perform frame exchange.

9. A method in a wireless local area network (WLAN) system, the method comprising:
transmitting, by a second access point (AP), notification information for a first Transmit Opportunity (TXOP) to a first AP;
transmitting, by the second AP, a Multi User-Request to Send (MU-RTS) TXOP Sharing (TXS) trigger frame to the first AP; and
receiving, by the second AP, a Clear to Send (CTS) frame from the first AP,
wherein a first frame is exchanged between the first AP and a first non-AP Station (STA) after Short Inter Frame Space (SIFS) or PCF Inter Frame Space (PIFS) based on the CTS frame being transmitted,
wherein the second AP is a Sharing AP that controls coordination between multiple APs,
wherein the first AP is a Shared AP that receives resources allocated or shared from the Sharing AP,
wherein the first non-AP STA is a non-AP STA within a Basic Service Set (BSS) of the first AP, and
wherein the first TXOP is an entire duration including all TXOPs in which the first and second APs participating in the coordination between the plurality of APs individually perform frame exchange.

10. The method of claim 9, further comprising: receiving, by the second AP, response information for the notification information for the first TXOP from the first AP,
wherein the notification information for the first TXOP includes at least one of an identifier of a group for the coordination between the plurality of APs, an identifier of the Shared AP, a capability of the Sharing AP, information on a TXS operation of the Sharing AP, information on a scheme for coordination between the plurality of APs, address information of the Shared AP, channel information in which the plurality of APs operate, bandwidth information in which the plurality of APs operate, information on a duration of the first TXOP, information on a timing of TXS by the Sharing AP and information on low-latency traffic transmitted and received by each of the plurality of APs, and
wherein the response information includes at least one of an identifier of a group for the coordination between the plurality of APs, an identifier of the Shared AP, address information of the Shared AP, channel information in which the plurality of APs operate, bandwidth information in which the plurality of APs operate, information on a duration of a TXOP that the Shared AP wishes to be shared, buffer status information of the Shared AP, information on whether TXS by the Sharing AP is necessary, information on low-latency traffic transmitted and received by each of the plurality of APs and a status code.

11. The method of claim 9, wherein a second TXOP is switched to a third TXOP based on a timing of transmission of the MU-RTS TXS trigger frame or the CTS frame,
wherein the second TXOP is a TXOP acquired by the second AP, and the third TXOP is a TXOP acquired by the first AP, and
wherein the notification information for the first TXOP is transmitted during the second TXOP, and the first frame is exchanged during the third TXOP.

12. The method of claim 11, wherein the first AP acquires the third TXOP after the SIFS or the PIFS based on the second TXOP being terminated, based on the notification information for the first TXOP,
wherein a basic Network Allocation Vector (NAV) for the second AP is set in the first non-AP STA based on the MU-RTS TXS trigger frame,
wherein a timer value of the basic NAV for the second AP is ignored with termination of the second TXOP based on the notification information for the first TXOP, and
wherein an Intra-Basic Service Set (BSS) NAV is set in the first non-AP STA based on the first frame.

13. The method of claim 12, wherein a value of a Duration or Identifier (ID) field of the first frame does not exceed a sum of a value of an Allocation Duration subfield of a User Info field of the MU-RTS TXS trigger frame, a length of a PPDU of the MU-RTX TXS trigger frame and a time required to transmit the CTS frame.

14. The method of claim 13, further comprising: receiving, by the second AP, a frame for TXOP return from the first AP after exchange of the first frame is completed,
wherein, based on the notification information for the first TXOP, the second AP transmits a second frame to a second non-AP STA after SIFS or PIFS based on receiving the frame for the TXOP return,
wherein the third TXOP is terminated at a timing when the frame for the TXOP return is transmitted,
wherein a timing when the third TXOP is terminated is determined based on the value of the Allocation Duration subfield of the User Info field of the MU-RTS TXS trigger frame, and
wherein the second non-AP STA is a non-AP STA within a BSS of the second AP.

15. The method of claim 14, wherein the third TXOP is switched to a fourth TXOP based on a timing of transmission of the second frame, and
wherein the fourth TXOP is a remaining TXOP acquired again by the second AP and does not exceed the duration of the first TXOP.

16. A second access point (AP) in a wireless local area network (WLAN) system, the second AP comprising:
a memory;
a transceiver; and
a processor being operatively connected to the memory and the transceiver,
wherein the processor is configured to:
transmit notification information for a first Transmit Opportunity (TXOP) to a first AP;
transmit a Multi User-Request to Send (MU-RTS) TXOP Sharing (TXS) trigger frame to the first AP; and
receive a Clear to Send (CTS) frame from the first AP,
wherein a first frame is exchanged between the first AP and a first non-AP Station (STA) after Short Inter Frame Space (SIFS) or PCF Inter Frame Space (PIFS) based on the CTS frame being transmitted,
wherein the second AP is a Sharing AP that controls coordination between multiple APs,
wherein the first AP is a Shared AP that receives resources allocated or shared from the Sharing AP,
wherein the first non-AP STA is a non-AP STA within a Basic Service Set (BSS) of the first AP, and
wherein the first TXOP is an entire duration including all TXOPs in which the first and second APs participating in the coordination between the plurality of APs individually perform frame exchange.

17. A computer readable medium including an instruction being executed by at least one processor and performing a method comprising the steps of:
receiving notification information for a first Transmit Opportunity (TXOP) from a second access point (AP);
receiving a Multi User-Request to Send (MU-RTS) TXOP Sharing (TXS) trigger frame from the second AP;
transmitting a Clear to Send (CTS) frame to the second AP; and
exchanging a first frame with a first non-AP station (STA) after Short Inter Frame Space (SIFS) or PCF Inter Frame Space (PIFS) based on the CTS frame being transmitted,
wherein the second AP is a Sharing AP that controls coordination between multiple APs,
wherein a first AP is a Shared AP that receives resources allocated or shared from the Sharing AP,
wherein the first non-AP STA is a non-AP STA within a Basic Service Set (BSS) of the first AP, and
wherein the first TXOP is an entire duration including all TXOPs in which the first and second APs participating in the coordination between the plurality of APs individually perform frame exchange.

18. A device in a wireless local area network (WLAN) system, the device comprising:
a memory; and
a processor being operatively connected to the memory,
wherein the processor is configured to:
receive notification information for a first Transmit Opportunity (TXOP) from a second access point (AP);
receive a Multi User-Request to Send (MU-RTS) TXOP Sharing (TXS) trigger frame from the second AP;
transmit a Clear to Send (CTS) frame to the second AP; and
exchange a first frame with a first non-AP station (STA) after Short Inter Frame Space (SIFS) or PCF Inter Frame Space (PIFS) based on the CTS frame being transmitted,
wherein the second AP is a Sharing AP that controls coordination between multiple APs,
wherein a first AP is a Shared AP that receives resources allocated or shared from the Sharing AP,
wherein the first non-AP STA is a non-AP STA within a Basic Service Set (BSS) of the first AP, and
wherein the first TXOP is an entire duration including all TXOPs in which the first and second APs participating in the coordination between the plurality of APs individually perform frame exchange.
